(19) Europäisches Patentamt
European Patent Office
Office européen des brevets

(11) **EP 4 166 519 A1**

(12) **EUROPÄISCHE PATENTANMELDUNG**

(43) Veröffentlichungstag:
**19.04.2023 Patentblatt 2023/16**

(21) Anmeldenummer: **22200472.3**

(22) Anmeldetag: **10.10.2022**

(51) Internationale Patentklassifikation (IPC):
*C03C 3/091* (2006.01)    *B32B 17/00* (2006.01)
*B60R 1/00* (2022.01)    *C03C 3/093* (2006.01)
*C03C 8/02* (2006.01)    *C03C 8/04* (2006.01)
*C03C 8/16* (2006.01)    *C03C 17/00* (2006.01)
*C03C 17/34* (2006.01)    *C03C 27/10* (2006.01)
*C09D 1/00* (2006.01)    *C09D 11/037* (2014.01)

(52) Gemeinsame Patentklassifikation (CPC):
**C03C 3/091; B32B 1/00; B32B 7/022; B32B 7/12;
B32B 17/10036; B32B 17/10119; B32B 17/10266;
B32B 17/10348; B32B 17/10761; B32B 17/10908;
B32B 27/30; B60R 1/00; C03C 3/093; C03C 8/02;
C03C 8/04;**      (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **14.10.2021 DE 102021126693
12.05.2022 DE 102022111945**

(71) Anmelder:
• **SCHOTT AG
55122 Mainz (DE)**

• **SCHOTT Technical Glass Solutions GmbH
07745 Jena (DE)**

(72) Erfinder:
• **MENKE-BERG, Dr. Yvonne
65197 Wiesbaden (DE)**
• **KRECHEL, Dr. Ricarda
55576 Sprendlingen (DE)**
• **WIESEKE, Hubert
07743 Jena (DE)**

(74) Vertreter: **Blumbach · Zinngrebe Patentanwälte
PartG mbB
Alexandrastraße 5
65187 Wiesbaden (DE)**

(54) **GLASSCHEIBE UMFASSEND WENIGSTENS EINE IN WENIGSTENS EINEM BEREICH WENIGSTENS EINER SEITE DER GLASSCHEIBE AUFGETRAGENE BESCHICHTUNG, PASTE ZUR HERSTELLUNG EINER SOLCHEN GLASSCHEIBE UND VERBUND UMFASSEND EINE SOLCHE SCHEIBE SOWIE DESSEN VERWENDUNG**

(57) Die vorliegende Erfindung bezieht sich allgemein auf Glasscheiben, insbesondere auf solche Glasscheiben, welche in wenigstens einem Bereich wenigstens einer Seite der Glasscheibe eine Beschichtung aufweisen. Im Speziellen bezieht sich die Erfindung auf Glasscheiben umfassend ein Glas umfassend $SiO_2$ und $B_2O_3$, als auf Glasscheiben aus oder umfassend ein Borosilikatglas. Die Erfindung bezieht sich weiterhin gemäß eines weiteren Aspekts auf eine Paste zur Herstellung einer solchen Glasscheibe, auf einen Verbund, welcher eine solche Glasscheibe umfasst, und dessen Verwendung.

Fig. 1

(52) Gemeinsame Patentklassifikation (CPC): (Forts.)
**C03C 8/16; C03C 17/002; C03C 17/007;**
**C03C 17/3417; C03C 27/10; C09D 1/00;**
**C09D 11/037;** B32B 2307/4023; B32B 2307/41;
B32B 2307/412; B32B 2307/546; B32B 2605/08;
C03C 2205/02; C03C 2209/00; C03C 2217/425;
C03C 2217/452; C03C 2217/477;
C03C 2217/485; C03C 2217/72; C03C 2217/78;
C03C 2217/91; C03C 2218/119

**Beschreibung**

Gebiet der Erfindung

Die vorliegende Erfindung bezieht sich allgemein auf Glasscheiben, insbesondere auf solche Glasscheiben, welche in wenigstens einem Bereich wenigstens einer Seite der Glasscheibe eine Beschichtung aufweisen. Im Speziellen bezieht sich die Erfindung auf Glasscheiben umfassend ein Glas umfassend $SiO_2$ und $B_2O_3$, und insbesondere auf Glasscheiben aus oder umfassend ein Borosilikatglas. Die Erfindung bezieht sich weiterhin gemäß eines weiteren Aspekts auf eine Paste zur Herstellung einer Beschichtung einer solchen Glasscheibe, auf einen Verbund, welcher eine solche Glasscheibe umfasst, und dessen Verwendung.

Hintergrund der Erfindung

Glasscheiben aus oder umfassend Borosilikatgläser, insbesondere auch solche, welche zumindest bereichsweise beschichtet sind, sind bereits seit langem bekannt und finden ihren Einsatz beispielsweise als Backofensichtscheiben in Backofentüren. Die Vorteile des Borosilikatglases sind hier dessen thermische Beständigkeit im Vergleich zu herkömmlichen Kalknatrongläsern, so dass beispielsweise Backofensichtscheiben für Pyrolyseöfen häufig solche Borosilikatglasscheiben umfassen.

Aber auch für andere Anwendungen können Borosilikatgläser vorteilhaft sein, da solche Gläser inhärente Vorteile beispielsweise hinsichtlich Kratzfestigkeit bzw. allgemein mechanischer Beständigkeit sowie auch chemischer Beständigkeit gegenüber den bekannten Kalknatrongläsern aufweisen. Daher werden zunehmend solche Borosilikatglasscheiben auch in Windschutzscheiben eingesetzt.

Es ist bekannt, in der Außenverglasung von Fahrzeugen beispielsweise Borosilikatglas, wie es beispielsweise unter dem Handelsnamen Borofloat ® kommerziell erhältlich ist, einzusetzen. Ein solches Glas ist beispielsweise sehr gut geeignet für Laminatverglasungen und zeichnet sich durch eine sehr hohe Transmission im Bereich des sichtbaren Lichts aus. Weiterhin verfügen solche Borosilikatgläser über eine sehr gute Wärmebeständigkeit, eine hohe chemische Beständigkeit und eine gute mechanische Festigkeit.

Beispielsweise beschreibt die internationale Patentanmeldung WO 2015/059406 A laminierte Glasscheiben. Eine dieser Scheiben kann beispielsweise ein Borosilikatglas umfassen, beispielsweise die äußere Scheibe.

Die internationale Patentanmeldung WO 2017/157660 A1 beschreibt eine Verbundglasscheibe für ein Head-Up-Display. Auch hier kann eine der Scheiben des Verbundglases Borosilikatglas umfassen.

Die CO 2017/0005596 A1 beschreibt ebenfalls eine Autoglasscheibe mit hoher Beständigkeit.

Die internationale Patentanmeldung WO 2019/130285 A1 beschreibt ein Laminat mit hoher Beständigkeit gegen Abrasion und Umwelteinflüsse.

Schließlich beschreibt die internationale Patentanmeldung WO 2018/122769 A1 ein Laminat mit hoher Bruchfestigkeit.

Windschutzscheiben sind zur Sicherheit der Fahrzeuginsassen als Verbundglasscheiben ausgebildet und weisen im Randbereich üblicherweise eine Beschichtung auf. Diese Beschichtung dient zum einen der optischen Kaschierung beispielsweise von Verklebungen oder Komponenten, wie beispielsweise Antennen, zum anderen auch deren Schutz vor UV-Strahlung. In der Regel ist dieser Rahmen zwischen den beiden Glasscheiben eines Verbundes angeordnet. Der Verbund umfasst ferner noch eine polymerische, somit eine ein Polymer umfassende oder aus einem Polymer bestehende Lage zwischen den beiden Glasscheiben, welche die Glasscheiben miteinander verbindet. Die Glasscheiben mit der zwischen ihnen angeordneten Beschichtung in wenigstens einem Bereich, insbesondere im Randbereich, werden aufeinander gelegt und in einem thermischen Umformungsprozess gebogen. Anschließend wird eine polymerische Lage zwischen beide Scheiben gebracht und die gebogenen Glasscheiben miteinander verbunden, sodass schließlich eine Verbundglasscheibe (welche im Rahmen der vorliegenden Offenbarung auch einfach als "Verbund" bezeichnet wird), erhalten wird.

An Glasscheiben, welche von einem solchen Verbund umfasst sind, werden daher eine Reihe von Anforderungen gestellt. Da die Biegeprozesse thermisch erfolgen, müssen die Glasscheiben und die darauf aufgebrachte Beschichtung diesen Temperaturen gewachsen sein. Die Glasscheiben und die Beschichtung müssen mit der polymerischen Lage eine Verbindung in der Form eingehen können, dass ein stabiler Verbund gebildet wird und es nicht zu Delaminationen zwischen Glas und Polymer kommt. Schließlich ist es erforderlich, dass die Beschichtung eine ausreichende optische Dichtigkeit aufweist, damit Komponenten, die im Rahmenbereich der Windschutzscheibe angeordnet sind, nicht störend sichtbar sind. Dies verhindert eine Ablenkung des Fahrzeugführers und erhöht so die Fahrsicherheit. Auch Mikrorisse oder sonstige Defekte der Beschichtung sind nach Möglichkeit zu vermeiden oder mindestens zu minimieren.

Neben der Temperaturbeständigkeit von Glas und Beschichtung, der angesprochenen Kompatibilität von Glas bzw. Beschichtung mit einem polymerischen Material zur Bildung eines Verbundes, der optischen Dichte und der Minimierung möglicher Defekte spielt jedoch auch die mechanische Festigkeit, beispielhaft charakterisiert durch die Bruchfestigkeit, einer beschichteten Glasscheibe eine Rolle. Hier ist es bekannt, dass Beschichtungen, gerade besonders haftfeste Beschichtungen, die Festigkeit einer Glasscheibe beeinträchtigen können. Gerade besonders haftfeste Beschichtungen wie glasbasierte Beschichtungen können hier die mechanische Festigkeit, wie Bruchfestigkeit oder Biegefestigkeit, kritisch herabsetzen. Dies gilt prinzipiell für alle Glassubstrate, aber umso mehr, wenn das Substrat, hier also die Glasscheibe, einen niedrigen Ausdehnungskoeffizienten aufweist, wie dies bei Borosilikatglasscheiben der Fall ist. Denn hier kann es beispielsweise bei der Verwendung bekannter keramischer Farben zu Unterschieden in den Ausdehnungskoeffizienten von Beschichtung und Substrat kommen, welche als ursächlich für die beobachteten Festigkeitsverluste beschichteter Glasscheiben erachtet werden.

Es besteht damit ein Bedarf an beschichteten Glasscheiben, welche die vorgenannten Schwächen des Standes der Technik zumindest mildern.

Aufgabe der Erfindung

Die Aufgabe der vorliegenden Erfindung ist die Bereitstellung einer zumindest bereichsweise beschichteten Glasscheibe für ein Fahrzeug, welche die vorgenannten Schwächen des Standes der Technik zumindest teilweise mindert. Weitere Aspekte der Erfindung sind gerichtet auf eine Paste, insbesondere zur Herstellung einer Beschichtung einer solchen Glasscheibe, einen Verbund, welcher eine solche Glasscheibe umfasst, sowie deren Verwendung.

Zusammenfassung der Erfindung

Die Aufgabe der Erfindung wird gelöst durch den Gegenstand der unabhängigen Ansprüche. Bevorzugte und spezielle Ausführungsformen finden sich in den abhängigen Ansprüchen, der Beschreibung und den Zeichnungen der vorliegenden Offenbarung.

Die Erfindung betrifft daher eine Glasscheibe für ein Fahrzeug umfassend ein Glas umfassend $SiO_2$ und $B_2O_3$. Die Glasscheibe weist wenigstens eine in wenigstens einem Bereich wenigstens einer Seite der Glasscheibe aufgetragene Beschichtung mit einer ersten Beschichtung auf. Die erste Beschichtung umfasst wenigstens ein Bindemittel umfassend $SiO_2$, wenigstens ein Pigment und vorzugsweise wenigstens einen Zusatzstoff. Die Glasscheibe weist in dem wenigstens einen Bereich, welcher auf der wenigstens einen Seite der Glasscheibe die aufgetragene erste Beschichtung aufweist, eine Biegefestigkeit zwischen wenigstens 5 und höchstens 170 MPa auf, beispielsweise zwischen 5 MPa und höchstens 80 MPa. Bevorzugte Bereiche liegen zwischen wenigstens 20 und höchstens 170 MPa, bevorzugt wenigstens 35 MPa, besonders bevorzugt wenigstens 60 MPa, und am meisten bevorzugt wenigstens 80 MPa. Das Bindemittel kann nach einer Ausführungsform glasbasiert sein, insbesondere als Glasfritte und die Beschichtung als Emailleschicht ausgebildet. Der Zusatzstoff kann nach einer Ausführungsform vorhanden sein und als ein Füllstoff ausgebildet.

Unter einer Glasscheibe für ein Fahrzeug wird allgemein eine Glasscheibe für mobile Anwendungen verstanden, beispielsweise also für Flugzeuge und/oder Automobile.

Eine solche Glasscheibe weist eine Reihe von Vorteilen auf.

Die Glasscheibe umfasst vorliegend ein Glas umfassend $SiO_2$ und $B_2O_3$, also ein sogenanntes Borosilikatglas. Bei dieser Art von Glasmaterial (oder kurz Glas) handelt es sich um ein chemisch sehr beständiges Material, das auch mechanisch beständig ist und im Vergleich zu herkömmlichen Gläsern wie Kalknatrongläsern eine gute thermische Beständigkeit und eine gute mechanische Festigkeit auch in einem nicht vorgespannten Zustand aufweist. Auch hat sich gezeigt, dass die Kratzfestigkeit solcher Borosilikatgläser höher ist als die von Kalknatrongläsern.

Die Beschichtung ist in wenigstens einem Bereich auf wenigstens einer Seite der Glasscheibe ausgebildet. Vorzugsweise ist die Beschichtung in Form eines Rahmens über den gesamten Randbereich einer Seite der Glasscheibe ausgebildet, wobei es weiterhin möglich ist, dass hin zu dem mittleren Bereich der Glasscheibe die Beschichtung nicht mehr deckend, sondern in Form eines sogenannten Punktrasters aufgebracht ist. Dies kann vorteilhaft sein, wenn die Glasscheibe als Bestandteil eines Verbundes verwendet wird, der als Windschutzscheibe zum Einsatz kommt.

Vorteilhaft kann es hier beispielsweise sein, wenn die Beschichtung für die nachfolgend noch detaillierter angegebenen Dicken der Beschichtung eine optische Dichte aufweist, welche bei mindestens 1 und höchstens 4,5, beispielsweise bei höchstens 3, bevorzugt bei mehr als 2, liegt. Die optische Dichte wird bestimmt in einem Bereich, in welchem die Beschichtung vollflächig aufgetragen ist.

Die Beschichtung ist vorliegend als chemisch und thermisch beständige Beschichtung ausgebildet. Dies bedeutet, dass die Beschichtung ein Bindemittel umfassend $SiO_2$ umfasst. $SiO_2$ weist eine gute chemische Beständigkeit auf und ist auch temperaturstabil.

Die Beschichtung umfasst weiterhin wenigstens ein Pigment. Unter einem Pigment wird im Rahmen der vorliegenden Offenbarung ein partikelbasierter Farbkörper verstanden. Vorteilhaft ist auch das Pigment nach der vorliegenden Offenbarung temperaturstabil ausgebildet, und es handelt sich dabei vorzugsweise um einen keramischen Farbkörper. Hierbei wird allgemein im Rahmen der vorliegenden Offenbarung unter einem Farbkörper (oder Pigment) verstanden, dass der Farbkörper aus Partikeln besteht, welche hier auch als Pigmentpartikel bezeichnet werden können. Sofern im Rahmen der vorliegenden Offenbarung daher ausgeführt wird, dass eine Beschichtung ein Pigment umfasst, wird darunter verstanden, dass die Beschichtung Partikel eines bestimmten Pigments oder Farbkörpers umfasst, also Partikel mit der Zusammensetzung des Pigments oder Farbkörpers.

Keramische Farbkörper oder keramische Pigmente als solches sind dem Fachmann bekannt. Beispielsweise kann es sich hier um metallische Mischoxide wie Spinelle, Hämatite handeln oder um pure Oxide wie $TiO_2$.

Weiterhin kann die erste Beschichtung nach einer Ausführungsform einen Zusatzstoff umfassen. Dies ist aber nicht allgemein notwendig, und es kann auch bevorzugt sein, dass die erste Beschichtung keinen Zusatzstoff umfasst.

Nach einer Ausführungsform ist das Bindemittel glasbasiert und als Glasfritte ausgebildet und die Beschichtung ist eine Emailleschicht. Weiterhin umfasst nach dieser bevorzugten Ausführungsform die Beschichtung einen Zusatzstoff, welcher als Füllstoff ausgebildet ist. Es kann nach dieser besonderen Ausführungsform auch vorgesehen sein, dass die Beschichtung zusätzlich einen oder mehrere weitere Zusatzstoffe umfasst, was aber nicht zwingend erforderlich ist.

Die Erfinder haben herausgefunden, dass mit einer solchen Ausführungsform eine besonders gute Festigkeit der beschichteten Glasscheibe erzielt werden kann. Sie vermuten, dass dies daran liegt, dass sich auf diese Weise ein besonders guter Schichtaufbau erzielen lässt, bei welchem eine gewisse Porosität in der Beschichtung erzielt werden kann durch eine gleichmäßige Verteilung von Füllstoffen in der Beschichtung. Insbesondere, wie auch in den Figuren noch gezeigt werden wird, scheint es bei einer solchen Ausgestaltung von Glasscheiben zu einer Porosität der Beschichtung zu kommen, die insbesondere hin zur Grenzfläche Beschichtung/Glasscheibe gerichtet ist, mithin also im Bereich der sogenannten Anschmelz-Reaktionszone.

Gemäß einer bevorzugten Variante dieser Ausführungsform ist daher die Glasscheibe so ausgestaltet, dass sie einen Porositätsgradienten aufweist, wobei die Porosität der Beschichtung von der Glasscheibe hin zur Oberfläche der Beschichtung abnimmt.

Sofern im Rahmen der vorliegenden Anmeldung auf eine Glasscheibe Bezug genommen wird, handelt es sich dabei, sofern nicht ausdrücklich anders ausgeführt, um eine beschichtete Glasscheibe.

Die beschichtete Glasscheibe nach Ausführungsformen weist allgemein, insbesondere in dem Bereich, in welchem die vorliegend offenbarte Beschichtung aufgetragen ist, eine Biegefestigkeit zwischen wenigstens 5 MPa und höchstens 170 MPa auf, beispielsweise zwischen 5 MPa und höchstens 80 MPa. Bevorzugte Bereiche liegen zwischen wenigstens 20 und höchstens 170 MPa, bevorzugt wenigstens 35 MPa, besonders bevorzugt wenigstens 60 MPa, und am meisten bevorzugt wenigstens 80 MPa.. Auf diese Weise ist eine ausreichende Festigkeit der beschichteten Glasscheibe für den Einsatz beispielsweise als Scheibe in einem Verbund gegeben. Die Biegefestigkeit der (beschichteten) Glasscheibe beträgt dabei in dem beschichteten Bereich vorzugsweise mindestens 50% der Biegefestigkeit der unbeschichteten Glasscheibe. Die Biegefestigkeit einer unbeschichteten Glasscheibe derselben Zusammensetzung und Ausgestaltung liegen dabei vorzugsweise zwischen mindestens 100 MPa und höchstens 210 MPa,, beispielsweise bei höchstens 200 MPa, wie beispielsweise bei etwa 150 MPa. Bei der mechanischen Festigkeit, wie beispielsweise der Biegefestigkeit, handelt es sich um einen statistischen Wert, sodass hier selbstverständlich auch nicht dieselbe Scheibe vor und nach Beschichtung hinsichtlich der Biegefestigkeit untersucht würde; diese vorstehende Aussage bezieht sich vielmehr auf Untersuchungen, die an unbeschichteten Glasscheiben und beschichteten Glasscheiben derselben Zusammensetzungen und Ausgestaltung durchgeführt wurden. Als Biegefestigkeit wird im Rahmen der vorliegenden Offenbarung eine auch als Doppelringbiegezugfestigkeit bezeichnete Festigkeit der Glasscheibe verstanden, welche jeweils nach DIN 1288-5 ermittelt wurde. Im Rahmen der vorliegenden Offenbarung wird als Festigkeitswert jeweils das arithmetische Mittel angegeben.

Gemäß einer Ausführungsform beträgt der flächige Belegungsgrad der wenigstens einen Seite der Glasscheibe mit der Beschichtung mindestens 10% und höchstens 80%, bevorzugt mindestens 15% und höchstens 65% der gesamten Oberfläche der Seite der Scheibe, auf welche die Beschichtung aufgetragen ist.

Unter einer Scheibe wird im Rahmen der vorliegenden Offenbarung allgemein ein plattenförmiger Formkörper verstanden. Eine Glasscheibe (die beschichtet und unbeschichtet vorliegen kann) ist eine Scheibe umfassend bzw. aus Glas. Plattenförmig ist ein Formkörper dann, wenn seine räumlichen Abmessungen in einer Raumrichtung eines kartesischen Koordinatensystems wenigstens eine Größenordnung geringer ist als die räumlichen Abmessungen in den beiden weiteren, zur ersten Raumrichtung senkrechten, Raumrichtungen des kartesischen Koordinatensystems. Mit anderen Worten ist die Dicke des Formkörpers wenigstens eine Größenordnung geringer als seine Länge und Breite. Die beiden Hauptflächen oder Hauptoberflächen der Scheibe, also die, deren Größe durch Länge und Breite bestimmt werden, werden im Rahmen der vorliegenden Offenbarung auch abkürzend lediglich Seiten genannt.

Gemäß einer weiteren Ausführungsform beträgt der visuelle Transmissionsgrad, $\tau_{vis}$, in dem wenigstens einen Bereich der Glasscheibe, in welchem die Beschichtung angeordnet ist, höchstens 10%, bevorzugt höchstens 7% und besonders bevorzugt höchstens 5%, ganz besonders bevorzugt höchstens 1%. Gemäß einer Ausführungsform beträgt $\tau_{vis}$ wenigstens 0,01%, bevorzugt wenigstens 0,05%, und bevorzugt maximal 0,3%. Diese Werte beziehen sich hier auf einen Bereich, in welchem die Beschichtung die Glasscheibe vollflächig bedeckt.

Die Beschichtung kann auf der Glasscheibe in dem mindestens einen Bereich deckend, also - bezogen auf den Bereich "vollflächig", also ohne Unterbrechung in der Beschichtung - aufgebracht sein, aber auch beispielsweise in Form eines sogenannten Punktrasters angeordnet sein. Auch Kombinationen dieser Varianten sind möglich. Beispielsweise ist es auch möglich, dass eine vollflächige, also ohne Unterbrechungen der Beschichtung, auf der Glasscheibe angeordnete Beschichtung im Randbereich der Beschichtung, üblicherweise hin zur Mitte der Glasscheibe, in ein Punktraster übergeht. Dies ist beispielsweise eine übliche Ausgestaltung der Beschichtung, die also in diesem Falle strukturiert auf der Glasscheibe angeordnet ist, für Glasscheiben, die in Fahrzeugfrontscheiben eingesetzt werden.

Gemäß einer weiteren Ausführungsform ist das Bindemittel glasbasiert. Vorzugsweise kann vorgesehen sein, dass die Beschichtung als Emailleschicht ausgebildet ist.

Gemäß den vorliegend bevorzugten Ausführungsformen weist die Beschichtung eine Dicke zwischen 3 $\mu$m und 30 $\mu$m auf, vorzugsweise zwischen 4 $\mu$m und 15 $\mu$m, besonders bevorzugt kleiner oder gleich 13 $\mu$m.

Gemäß einer Ausführungsform umfasst die erste Beschichtung einen Zusatzstoff in Form eines Füllstoffs, ist das Bindemittel glasbasiert als Glasfritte ausgebildet und die resultierende Beschichtung ist als Emailleschicht ausgebildet. Nach dieser speziellen Ausführungsform ist vorzugsweise der von der ersten Beschichtung umfasste Füllstoff ein Füllstoff mit einem linearen thermischen Ausdehnungskoeffizienten zwischen -10 $*$ 10$^{-6}$/K und +10 $*$ 10$^{-6}$/K. Bevorzugt liegt der lineare thermische Ausdehnungskoeffizient zwischen -8 $*$ 10$^{-6}$/K und +5 $*$ 10$^{-6}$/K, besonders bevorzugt zwischen -6,5 $*$ 10$^{-6}$/K und +3$*$ 10$^{-6}$/K.

Gemäß einer nochmals weiteren Ausführungsform weist die Glasscheibe in dem wenigstens einem Bereich, in welchem die Beschichtung angeordnet ist, für die vorstehend angegebenen Dicken der Beschichtung eine optische Dichte von wenigstens 1 und höchstens 4,5, beispielsweise höchstens 3, auf. Die optische Dichte oder Farbdichte wird benutzt, um das Absorptionsverhalten einer Beschichtung im Vergleich zu einem "Absolutweiß" zu charakterisieren. Je dichter die Farbschicht ist, umso weniger Licht kann durch sie hindurchtreten. Die optische Dichte wird nach folgender Formel berechnet:

$$D = \log\left(\frac{1}{R}\right)$$

R ist hierbei der Remissionsgrad. Bestimmt wird die optische Dichte mit Densitometern, insbesondere im Rahmen der vorliegenden Offenbarung in senkrechter Richtung zur größten flächigen Erstreckung der Beschichtung und somit der beschichteten Oberfläche der beschichteten Glasscheibe. Je höher die optische Dichte ist, desto weniger durchlässig erscheint die Beschichtung.

Unter einer glasbasierten Beschichtung wird allgemein eine solche Beschichtung verstanden, welche ein wenigstens überwiegend, also zu mehr als 50 Gew.-%, anorganisches, amorphes Bindemittel aufweist. Insbesondere kann eine solche glasbasierte Beschichtung auch ein Bindemittel aufweisen, welches im Wesentlichen, also zu mindestens 95 Gew.-%, oder sogar vollständig anorganisch und amorph ausgebildet ist. Zusätzlich zum Bindemittel kann eine glasbasierte Beschichtung allgemein noch weitere Bestandteile umfassen. Nach der vorliegenden Offenbarung umfasst die Beschichtung hier noch wenigstens ein Pigment.

Unter einer glasbasierten Beschichtung kann dabei insbesondere auch eine Beschichtung verstanden werden, welche ein Bindemittel auf Sol-Gel-Basis umfasst.

Insbesondere umfassen glasbasierte Beschichtungen aber auch sogenannte Emaillebeschichtungen.

Unter Emaillebeschichtungen oder Emailleschichten werden im Rahmen der vorliegenden Offenbarung Beschichtungen verstanden, welche eine Glasfritte oder Glasfluss als Bindemittel aufweisen. Beim Einbrennen solcher Beschichtungen schmelzen die Bestandteile des Glasflusses, somit der Glasfritte, auf und es kann sich eine Anschmelz-Reaktionszone an der Oberfläche des Substrats, beispielsweise der Glasscheibe, ausbilden. Im Rahmen der vorliegenden Offenbarung werden die Begriffe der Fritte, der Glasfritte oder des Glasflusses jeweils synonym für einander gebraucht. Weiterhin fließt das aufgeschmolzene Glas und umhüllt die gegebenenfalls weiteren, von der Emaillefarbe bzw. der aus einer solchen Farbe resultierenden Beschichtungen umfassten Bestandteile, wie beispielsweise Pigmentpartikel und/oder Füllstoffpartikel. Emailleschichten sind daher nach einer Ausführungsform besonders bevorzugt. Denn auf diese Weise können mechanisch besonders beständige Beschichtungen erhalten werden. Zudem ist die Oberfläche einer solchen Schicht glasartig ausgebildet und kann gegebenenfalls sogar, je nach der genauen Zusammensetzung der Glasfritte, der Zusammensetzung des Glases der Glasscheibe recht ähnlich sein. Auf diese Weise ist es also vorteilhaft nach einer Ausführungsform möglich, dass sich die Stärke der Verbindung zwischen den beiden Glasscheiben eines Verbundes in unterschiedlichen Bereichen nicht stark unterscheidet, sondern die Verbindung über die gesamte Seite der Glasscheibe gleichmäßig ausgebildet ist.

Unter einem Glasfluss oder (synonym) einer Glasfritte wird im Rahmen der vorliegenden Offenbarung ein glasbasiertes Bindemittel verstanden, welches zur Ausbildung einer Glasur und/oder Emailleschicht geeignet ist. Insbesondere kann es sich dabei um ein Glaspulver handeln, welches geeignet und bestimmt ist, mittels eines Druckverfahrens auf ein Substrat aufgebracht zu werden, wobei das Glaspulver auch mit ggf. weiteren Bestandteilen versetzt sein kann, beispielsweise Pigmenten.

Vorzugsweise weisen solche Glasflüsse/Glasfritten einen niedrigeren Schmelzpunkt und/oder Erweichungspunkt auf als das entsprechende Substratmaterial, insbesondere als das Material einer zu beschichteten Glasscheibe.

Gemäß einer weiteren Ausführungsform ist in wenigstens einem Teilbereich des Bereichs der wenigstens einen Seite der Glasscheibe, in welchem die erste Beschichtung aufgetragen ist, eine weitere Beschichtung, insbesondere als Zwischenschicht zwischen Glasscheibe und erster Beschichtung angeordnet. Bei dieser weiteren Ausführungsform umfasst die gesamte vorliegend offenbarte Beschichtung somit die erste Beschichtung und die weitere Beschichtung. Lediglich um der sprachlichen Kürze willen ist die gesamte Beschichtung nachfolgend vereinfachend teilweise auch lediglich als Beschichtung erwähnt.

Eine solche weitere Beschichtung, die als Zwischenschicht zwischen Glasscheibe und der Beschichtung angeordnet ist, kann sehr vorteilhaft sein, insbesondere für solche Ausgestaltungen der Glasscheibe, bei denen der Unterschied in den linearen thermischen Ausdehnungskoeffizienten zwischen Beschichtung und Glasscheibe so groß ist, dass es zu einer kritischen Abnahme der Festigkeit der beschichteten Glasscheibe kommt. In diesem Fall kann nämlich die weitere, zwischen der ersten, pigmentierten Beschichtung und der Glasscheibe angeordnete Beschichtung als eine Art Ausgleichsschicht wirken. Eine ähnliche Art der Beschichtung ist beispielhaft beschrieben in der europäischen Patentschrift EP 3 022 164 B1.

Eine solche weitere Beschichtung oder Zwischenschicht kann gerade für Fälle, in denen die erste, pigmentierte Beschichtung als Emailleschicht ausgebildet ist, vorteilhaft sein. Denn wie vorstehend beschrieben, bildet sich bei solchen Emaillebeschichtungen durch das Aufschmelzen des Glasflusses/der Glasfritte oft eine sogenannte Anschmelz-Reaktionszone am Kontakt zwischen der Oberfläche des Substrats, also hier der Glasscheibe, und der Beschichtung aus. Diese innige Verbindung führt zwar einerseits zu einer großen Haftfestigkeit der Beschichtung, kann aber auch im Falle großer Unterschiede in den linearen thermischen Ausdehnungskoeffizienten dazu führen, dass sich Risse bilden. Im Gegensatz zu glasbasierten Beschichtungen, welche kein Emaille, sondern beispielsweise ein Sol-Gel-Bindemittel umfassen, bildet sich bei einer Emaillebeschichtung, welche im Rahmen der vorliegenden Offenbarung auch als Frittenbeschichtung bezeichnet wird, eine Reaktionszone. Bei der Beschichtung eines Glassubstrats, wie einer Glasscheibe, ist diese Reaktionszone sehr fein ausgebildet und kann im REM nicht oder nur schwer gesehen werden. Risse bilden sich dabei nicht zwangsläufig, allerdings kann es sein, dass die Reaktionszone andere mechanische Eigenschaften aufweist als die Glasscheibe und die erste Beschichtung. Sofern sich nur eine solche Reaktionszone ausbildet, kann deren spezifische Ausbildung mit anderen Eigenschaften als das Substrat (hier die Glasscheibe) und der ersten Beschichtung also dazu führen, dass sich die Festigkeit der beschichteten Scheibe verringert. Im Falle der Rissbildung sind diese nicht nur störend sichtbar, sondern können ebenfalls die Festigkeit des beschichteten Substrats, hier also der Glasscheibe, empfindlich beeinträchtigen. Insbesondere kann es möglich sein, dass je nach genauer Ausgestaltung der Beschichtung und/oder der Glasscheibe keine ausreichende Biegefestigkeit der beschichteten Glasscheiben zwischen wenigstens 5 und höchstens 170 MPa, beispielsweise zwischen 5 MPa und höchstens 80 MPa, oder zwischen wenigstens 20 und höchstens 170 MPa, bevorzugt wenigstens 35 MPa, besonders bevorzugt wenigstens 60 MPa, und am meisten bevorzugt wenigstens 80 MPa mehr gegeben ist. Hier kann eine Zwischenschicht als weitere Beschichtung, beispielsweise eine ihrerseits glasbasierte Schicht, insbesondere eine glasflussbasierte Schicht, als eine Art Anpassungsschicht dienen. Insbesondere kann eine solche weitere Beschichtung unpigmentiert vorliegen. Es kann vorteilhaft sein, wenn die weitere Beschichtung oder Zwischenschicht den gleichen Glasfluss umfasst wie die erste pigmentierte Beschichtung, jedoch pigmentfrei ausgebildet ist. In diesem Fall kann sich ein gradientenartiger Übergang zwischen der weiteren Beschichtung und der ersten Beschichtung ergeben. Eine andere Art von Zwischenschicht besteht in einer Ausführung als poröse Schicht durch z.B. einem hohen Pigmentgehalt, welche die Spannungen aufnimmt und einer darüber liegenden Versiegelungsschicht aus Fritte mit wenig bis gar keinem Pigment.

Die Bezeichnungen "weitere Beschichtung" und "erste Beschichtung" beziehen sich hierbei nicht auf die Reihenfolge des Aufbringens, sondern lediglich darauf, dass die "erste Beschichtung" immer vorhanden ist, die weitere Beschichtung jedoch lediglich optional, also gemäß Ausführungsformen, vorhanden sein kann.

Es ist allgemein, ohne Beschränkung auf die vorstehend beschriebene Ausführung der weiteren Beschichtung als Anpassungsschicht, jedoch auch möglich, dass die weitere Beschichtung andere Funktionen wahrnimmt und/oder einen anderen Glasfluss bzw. eine andere Glasfritte aufweist als die erste Beschichtung und/oder als nicht glasbasierte Beschichtung oder zumindest nicht als Emailleschicht ausgeführt ist.

Somit kann die vorliegend offenbarte Beschichtung je nach Ausführungsform die erste Beschichtung und die weitere Beschichtung als Zwischenschicht umfassen oder lediglich die erste Beschichtung umfassen.

Generell kann die Paste für die erste Beschichtung zwischen 0,5 Vol.-% und 50 Vol.-% Pigment, vorzugsweise weniger als 40 Vol.-% Pigment, und zwischen 50 Vol.-% und 99,5 Vol.-% Bindemittel, beispielsweise Glasfritte, bezogen auf den von der Paste umfassten Feststoffanteil, umfassen.

Gemäß einer weiteren Ausführungsform umfasst die erste Beschichtung zwischen 0,5 Vol.-% und 50 Vol.-% Pigment, vorzugsweise zwischen 0,5 und 40 Vol.-% Pigment, insbesondere vorzugsweise zwischen 20 und 40 Vol.-%

Pigment.

Der Gehalt an Bindemittel in der ersten Beschichtung liegt zwischen 99,5 Vol.-% und 40 Vol.-% Bindemittel, vorzugsweise zwischen 99,5 und 50 Vol.-% Bindemittel, insbesondere vorzugsweise zwischen 80 und 55 Vol.-% Bindemittel, beispielsweise zwischen 80 und 60 Vol.-% Bindemittel, vorzugsweise glasbasiertes Bindemittel, wobei besonders bevorzugt eine Glasfritte das Bindemittel ausbildet. Nach einer weiteren bevorzugten Ausführungsform kann der Gehalt des Bindemittels in der ersten Beschichtung allgemein zwischen 78 Vol.-% und 50 Vol.-% liegen.

Gemäß einer Ausführung, bei welcher die Beschichtung neben dem Bindemittel und dem Pigment einen Zusatzstoff, beispielsweise einen als Füllstoff ausgebildeten Zusatzstoff, umfasst, kann es allgemein vorgesehen sein, wenn die Untergrenze des Bindemittelgehalts bei wenigstens 50 Vol.-% liegt.

Eine Ausgestaltung der Beschichtung und in entsprechender Weise der mit der Beschichtung versehenen Glasscheibe kann vorteilhaft sein, weil auf diese Weise eine Beschichtung erhalten werden kann, welche hinreichend optisch dicht ist. Denn durch den Pigmentgehalt, insbesondere von mindestens 0,5 Vol.-% Pigment, insbesondere in der ersten Beschichtung ist mit den vorliegend offenbarten Dicken der gesamten Beschichtung sichergestellt, dass eine optisch dichte, vorzugsweise sogar eine deckende Beschichtung erhalten wird. Diese kann also entsprechend verwendet werden, um beispielsweise im Rahmenbereich einer Windschutzscheibe angeordnete Komponenten oder Elemente zu kaschieren. Vorzugsweise kann der Pigmentanteil auch höher sein und beispielsweise 10 Vol.-% betragen oder auch mehr.

Jedoch sollte der Pigmentanteil allgemein nicht zu hoch sein. Vorzugsweise ist der Gehalt der Beschichtung an Pigment in der ersten Beschichtung nicht größer als 50 Vol.-% und beträgt bevorzugt vorzugsweise höchstens 40 Vol.-%, insbesondere für den Fall, dass eine ungefärbte Glasfritte als Bindemittel verwendet wird. Auf diese Weise ist nämlich sichergestellt, dass ein ausreichender Bindemittelanteil vorhanden ist. Wie ausgeführt, umhüllt das Bindemittel vorzugsweise die Pigmentpartikel und verbindet diese auf diese Weise miteinander und mit dem Substrat - also hier der Glasscheibe - zu einer gut haftenden Beschichtung, insbesondere auch dann, wenn die vorliegend beschriebene Zwischenschicht zwischen Beschichtung und Glasscheibe angeordnet ist.

Sofern die Beschichtung, insbesondere die erste Beschichtung neben dem Pigment bzw. den Pigmentpartikeln nur noch das Bindemittel umfasst, summieren sich die Volumenanteile von Bindemittel und Pigment vorzugsweise zu 100 auf. Mit anderen Worten umfasst die Beschichtung gemäß dieser Ausführungsform zwischen 99,5 Vol.-% und 50 Vol.-% Bindemittel, vorzugsweise glasbasiertes Bindemittel, wie beispielsweise Glasfluss /Glasfritte. Weiterhin zählt gegebenenfalls noch der Anteil eines oder mehrerer als Füllstoffe ausgebildeter Zusatzstoffe dazu. Das Volumen bestimmt die mechanischen und optischen Eigenschaften. Bei der Berechnung der Zusammensetzung der Beschichtung, insbesondere der ersten Beschichtung, wurde von der Feststoffzusammensetzung ausgegangen. Für den Fall, dass die Beschichtung neben wenigstens einem Pigment noch einen Zusatzstoff umfasst, muss unterschieden werden: Handelt es sich bei diesem Zusatzstoff um ein Blähmittel, wird dieser Zusatzstoff nicht in den Feststoffgehalt einbezogen, sondern zusätzlich berechnet. D.h. für den Fall einer Beschichtung mit Poren ist die Endschichtzusammensetzung anorganisch gleich zu einer dichten Schicht, aber es sind zusätzlich noch Poren eingebaut. Handelt es sich beim Zusatzstoff um einen Füllstoff, also einen festen Stoff, der sich nicht zersetzt und die Beschichtung eingebaut wird, so wird dieser in üblicher Weise in der Berechnung der Feststoffgehalte berücksichtigt.

Vorteilhaft wird das vorstehend genannte Volumenverhältnis zwischen Pigment und Bindemittel gemäß einer Ausführungsform auch eingehalten, wenn die Beschichtung weitere Komponenten umfasst, beispielsweise einen gewissen Anteil von Zusatzstoffen, wie beispielsweise Füllstoffen oder Porenformern.

Gemäß einer nochmals weiteren Ausführungsform weist das Glas der Glasscheiben einen linearen thermischen Ausdehnungskoeffizienten zwischen $2 * 10^{-6}$/K und $6 * 10^{-6}$/K auf. Dies ist vorteilhaft, weil auf diese Weise eine Ausgestaltung der Glasscheibe mittels bekannter, niedrigdehnender Borosilikatgläser möglich ist, welche bereits intrinsisch eine recht hohe Glasfestigkeit mit sich bringen. Weiterhin weisen solche Gläser auch eine recht gute thermische Beständigkeit auf und sich auch chemisch recht resistent.

Vorteilhaft umfasst das Glas der Glasscheibe gemäß einer Ausführungsform wenigstens 60 Gew.-% $SiO_2$ bis höchstens 85 Gew.-% $SiO_2$ und/oder wenigstens 7 Gew.-% $B_2O_3$ bis höchstens 26 Gew.-% $B_2O_3$. Solche Gläser sind insbesondere deshalb vorteilhaft, weil sie einen guten Kompromiss zwischen guter mechanischer, chemischer und thermischer Beständigkeit einerseits und guter Schmelzbarkeit andererseits bieten, ohne dass Entmischungstendenzen und/oder zu hohe Viskosität der Glasschmelze störend wirken.

Vorteilhaft weist die erste Beschichtung gemäß einer Ausführungsform einen linearen thermischen Ausdehnungskoeffizienten zwischen mindestens $3 * 10^{-6}$/K und höchstens $10 * 10^{-6}$/K auf, bevorzugt von weniger als $9 * 10^{-6}$/K, besonders bevorzugt von weniger als $7,5 * 10^{-6}$/K, ganz besonders bevorzugt von weniger als $6 * 10^{-6}$/K. Vorteilhaft kann diese Ausführungsform dabei insbesondere mit solchen Ausführungen der Glasscheibe verknüpft oder an diesen angebracht werden, bei welchen der lineare thermische Ausdehnungskoeffizient des Glases der Glasscheibe ebenfalls begrenzt ist und zwischen $2 * 10^{-6}$/K und $6 * 10^{-6}$/K liegt. Auf diese Weise können nämlich auf besonders einfache Weise Glasscheiben umfassend eine pigmentierte Beschichtung mit einem glasbasierten Bindemittel erhalten werden, welche eine ausreichende Biegefestigkeit aufweisen. Allerdings ist es allgemein auch möglich, Beschichtungen mit linearen thermischen Ausdehnungskoeffizienten in den vorgenannten Grenzen mit Glasscheiben zu kombinieren, welche einen deutlich höheren, abweichenden linearen thermischen Ausdehnungskoeffizienten aufweisen und umgekehrt. Hier werden dann allerdings andere Maßnahmen zum Ausgleich des Ausdehnungskoeffizientenunterschieds vorgenommen werden. Beispielsweise kann dies, wie auch vorstehend bereits beschrieben, durch eine sogenannte Anpassungsschicht oder Zwischenschicht als weitere Beschichtung erfolgen.

Bei einer Ausführung der ersten Beschichtung als Emailleschicht kann es vorgesehen sein, dass der lineare thermische Ausdehnungskoeffizient weniger als $7{,}5 * 10^{-6}$/K beträgt, vorzugsweise aber wenigstens bei $6 * 10^{-6}$/K liegt. Dies kann insbesondere dann der Fall sein, wenn zusätzlich zur thermischen Dehnung der resultierenden Beschichtung noch weitere Eigenschaften der Beschichtung berücksichtigt werden, beispielsweise eine ausreichende Kratzfestigkeit.

Jedoch sind prinzipiell auch andere Möglichkeiten denkbar.

So ist allgemein beispielsweise eine Ausgestaltung insbesondere der ersten Beschichtung in der Form denkbar, dass diese neben dem glasbasierten Bindemittel und dem Pigment noch einen oder gegebenenfalls mehrere Zusatzstoffe umfasst.

Im Rahmen der vorliegenden Offenbarung wird unter einem Zusatzstoff allgemein ein Feststoff verstanden, welcher einer Beschichtungszusammensetzung vorzugsweise in partikulärer Form bzw. als Pulver zugesetzt wird.

Ein solcher Zusatzstoff kann beispielsweise ein Füllstoff sein. Unter einem Füllstoff werden im Rahmen der vorliegenden Offenbarung insbesondere anorganische Feststoffe verstanden, welche in einer Beschichtung nicht als Farbkörper wirken. Es handelt sich also um Feststoffe, welche selbst nicht als Pigment wirken, sondern der Beschichtung aus anderen Gründen zugesetzt werden. Beispielsweise können solche Füllstoffe zur Verbesserung der Kratzbeständigkeit, bzw. zur Rissumlenkung (plättchen- oder nadelförmig), bzw. zur Einstellung eines niedrigeren Ausdehnungskoeffizienten $\alpha$ der Komposit-Schicht somit insbesondere der ersten Beschichtung dienen.

Vorliegend kann eine Ausgestaltung der Beschichtung in der Form, dass diese wenigstens einen Zusatzstoff in Form eines Füllstoffs umfasst, vorteilhaft sein, insbesondere für den Fall großer Unterschiede im thermischen Ausdehnungskoeffizienten von Glasscheibe (bzw. vom glasigen Material der Glasscheibe) und der Beschichtung. Deshalb ist vorgesehen nach einer Ausführungsform, dass die erste Beschichtung wenigstens einen Füllstoff umfasst.

Besonders vorteilhaft kann es sein, wenn der Füllstoff so ausgestaltet ist, dass er thermische Ausdehnungskoeffizientenunterschiede zwischen dem verwendeten Pigment oder den verwendeten Pigmenten, dem Glasfluss bzw. allgemein dem Bindemittel und dem Substrat zumindest verringern kann. Deshalb ist nach einer speziellen Ausführungsform vorgesehen, dass der Füllstoff ein Füllstoff mit einem linearen thermischen Ausdehnungskoeffizienten zwischen $-10 * 10^{-6}$/K und $+10 * 10^{-6}$/K ist. Bevorzugt liegt der lineare thermische Ausdehnungskoeffizient zwischen $-8 * 10^{-6}$/K und $+5 * 10^{-6}$/K, besonders bevorzugt zwischen $-6{,}5 * 10^{-6}$/K und $+3* 10^{-6}$/K.

Sofern im Rahmen der vorliegenden Anmeldung auf den thermischen Ausdehnungskoeffizienten Bezug genommen wird, wird hierunter der lineare thermische Ausdehnungskoeffizient $\alpha$ verstanden. Sofern nicht anders ausgeführt, ist dieser im Bereich von 20-300°C angegeben. Die Bezeichnungen $\alpha$ und $\alpha_{20\text{-}300}$ werden im Rahmen dieser Erfindung synonym verwendet. Dieser kann insbesondere für glasige Materialien bestimmt werden in einer Methode nach ISO 7991. Unter dem thermischen Ausdehnungskoeffizienten der Beschichtung wird dabei jeweils der resultierende thermische Ausdehnungskoeffizient der entsprechenden Beschichtung verstanden, der sich aus den thermischen Ausdehnungskoeffizienten der einzelnen Bestandteile der Beschichtung unter Berücksichtigung ihres Anteils an der Beschichtung ergibt. Sofern im Rahmen der vorliegenden Anmeldung auf den thermischen Ausdehnungskoeffizienten der Glasscheibe abgestellt wird, ist dabei immer der thermische Ausdehnungskoeffizient des glasigen Materials (oder Glases) der Glasscheibe (also des Substrats) gemeint.

Ein Zusatzstoff, insbesondere in Form eines niedrigdehnenden Füllstoffs, ist wie vorstehend ausgeführt, eine Möglichkeit, den thermischen Ausdehnungskoeffizienten und in entsprechender Weise den Ausdehnungskoeffizientenunterschied zwischen Beschichtung und Glasscheibe gezielt einzustellen, insbesondere zu minimieren. Beispielsweise kann ein solcher Füllstoff ein niedrig- oder sogar negativdehnender Füllstoff sein, beispielsweise Kieselsäure oder $\beta$-Eukryptit oder Cordierit. Alternativ oder zusätzlich kann der Füllstoff aber auch, wie vorstehend ausgeführt, zur Verbesserung der Kratzbeständigkeit, bzw. zur Rissumlenkung (plättchen- oder nadelförmig) eingesetzt werden. Insbesondere eine Rissumlenkung kann beispielsweise helfen, die Folgen der entstandenen Rissenergie zumindest teilweise zu minimieren oder abzumildern, so dass die mechanischen Gesamteigenschaften der Glasscheibe zusammen mit der ersten Beschichtung mit dem Zusatzstoff oder auch zusammen mit der ersten Beschichtung mit dem Zusatzstoff und der Zwischenschicht im Wesentlichen erhalten bleiben, oder zumindest nicht zu stark herabgesetzt werden.

Alternativ oder zusätzlich ist aber auch eine andere Ausgestaltung eines Zusatzstoffes möglich. Beispielsweise können sogenannte Schäumungsmittel zum Einsatz kommen. Dabei handelt es sich um solche Mittel, welche sich unter Einwirken von Hitze beim Einbrand der Beschichtung unter Bildung einer fluiden Phase, vorzugsweise einer Gasphase, zersetzen. Dabei können in der Beschichtung Blasen entstehen. Solche Blasen oder Poren in einer Beschichtung können den thermischen Ausdehnungskoeffizienten der Beschichtung ebenfalls herabsetzen. Bekannte Schäumungsmittel sind beispielsweise allgemein Carbonate oder Phosphate, aber auch organische Zusätze wie Stärke oder Zucker.

Gemäß einer bevorzugten Ausführungsform umfasst also die Beschichtung einen Zusatzstoff, wobei der Zusatzstoff ein Füllstoff oder ein Schäumungsmittel (auch als Blähmittel bezeichnet) ist. Insbesondere ist es auch möglich, dass die Beschichtung mehrere Zusatzstoffe, beispielsweise einen Füllstoff und ein Schäumungsmittel, umfasst, oder auch mehrere Füllstoffe und/oder mehrere Schäumungsmittel.

Gemäß einer nochmals weiteren Ausführungsform weist die Glasscheibe eine Dicke zwischen mindestens 1 mm und höchstens 12 mm auf.

Gemäß einer nochmals weiteren Ausführungsform umfasst das Bindemittel eine Glasfritte oder besteht aus dieser, wobei bevorzugt die Glasfritte einen färbenden Bestandteil umfasst, und/oder wobei besonders bevorzugt der Anteil des Pigments an der jeweiligen ersten Beschichtung höchstens 40 Vol.-%, bevorzugt höchstens 20 Vol.-%, umfasst. Vorzugsweise kann vorgesehen sein, dass die einen färbenden Bestandteil umfassende Glasfritte mit einem Pigmentanteil von höchstens 40 Vol.-%, bevorzugt 20 Vol.-%, kombiniert ist.

Eine solche Ausgestaltung der Beschichtung und in entsprechender Weise der Glasscheibe kann vorteilhaft sein, wenn der Gehalt der Beschichtung an Pigment gering gehalten werden soll. Dies kann aus mehreren Gründen gewünscht sein. So sind Pigmente in der Regel relativ hochpreisige Komponenten, insbesondere solche, welche eine hohe Farbstärke aufweisen. Daher kann es wirtschaftlich sein, wenn eine Beschichtung einen möglichst geringen Anteil von Pigmenten aufweist.

Weiterhin können üblicherweise in einer Beschichtung verwendete keramische Pigmente einen im Vergleich zu Borosilikatgläsern recht hohe thermische Ausdehnungskoeffizienten aufweisen, beispielsweise Spinell-basierte Pigmente. Daher kann es unter dem Gesichtspunkt eines möglichst nicht zu hohen thermischen Ausdehnungskoeffizienten der jeweiligen Beschichtung vorteilhaft sein, den Gehalt der Beschichtung an Pigmenten zu begrenzen.

Dies kann aber unter dem Gesichtspunkt der Deckkraft der resultierenden Beschichtung schlecht sein. Denn bei einem zu geringen Gehalt an Pigment kann es sein, dass eine nicht ausreichend deckende Beschichtung erhalten wird bzw. die Beschichtung, um deckend zu sein, eine sehr hohe Schichtdicke aufweisen müsste. Zu hohe Schichtdicken sind aber nicht nur aus Kostengründen (aufgrund des hohen Materialaufwands) ungünstig, sondern können auch zu Abplatzungen und Rissbildungen führen.

Daher kann es vorteilhaft sein, bei nur geringen Pigmentgehalten in der Beschichtung, insbesondere der ersten Beschichtung das Bindemittel, insbesondere eine Glasfritte, so auszuwählen, dass sie einen färbenden Bestandteil umfasst. Auf diese Weise trägt nämlich auch die Glasfritte zur Deckkraft der Beschichtung bei. Weiterhin kann es auch sein, dass störende Färbungen durch das Pigment (beispielsweise ein ungewünschter Braunstich, der häufiger bei Schwarzpigmenten auftritt) durch die Glasfritte aktiv gegengefärbt werden kann und so ein besonders neutral dunkler, schwarzer Farbeindruck erhalten wird. Dies ist gerade bei Beschichtungen, welche bei Glasverbunden im Fahrzeugbereich eingesetzt werden, ein Vorteil auch für die Fahrersicherheit. Denn auf diese Weise wird der Fahrer durch einen einheitlichen Farbeindruck im Randbereich einer Sichtscheibe nicht störend abgelenkt.

Die Offenbarung betrifft gemäß einem weiteren Aspekt auch eine Paste. Es handelt sich dabei um eine Paste zum Herstellen einer Beschichtung auf einer Glasscheibe, vorzugsweise einer ersten Beschichtung einer Glasscheibe, wie sie nach Ausführungsformen der vorliegenden Offenbarung beschrieben ist.

Die Paste umfasst

- wenigstens ein Bindemittel umfassend $SiO_2$ und
- wenigstens ein Pigment,
- vorzugsweise wenigstens ein Dispersionsmedium.

Das Medium oder Dispersionsmedium ist vorteilhaft für das Aufbringen der Paste auf der Glasscheibe, beispielsweise für das Aufbringen der Paste mittels eines Siebdruckverfahrens.

Das Bindemittel umfasst eine Glasfritte oder besteht aus dieser, wobei die Glasfritte ein Glas umfassend wenigstens die folgenden Bestandteile in Gew.-% auf Oxidbasis umfasst:

| | |
|---|---|
| $SiO_2$ | 10 bis 70 |
| $B_2O_3$ | 10 bis 26 |
| $Al_2O_3$ | mehr als 0 bis 9. |

Bei hoch Bi-haltigen Fritten, insbesondere hoch Bi-haltigen Borosilikat-Fritten kann die Glasfritte ein Glas umfassen, welches wenigstens die folgenden Bestandteile in Gew.-% auf Oxidbasis umfasst:

| Bereiche hoch Bi-haltiger Borosilikat-Fritten | | |
|---|---|---|
| $Bi_2O_3$ | 8-45 | |
| $B_2O_3$ | 15-25 | |

(fortgesetzt)

| Bereiche hoch Bi-haltiger Borosilikat-Fritten | | |
|---|---|---|
| $SiO_2$ | 30-60 | |
| Summe $R_2O$ | 4-5 | Alkalioxide |
| Summe RO | $\leq 0,5$ | Erdalkalioxide |

Die im vorstehenden Absatz angegebenen Fritten können optional einen Anteil von $Al_2O_3$ von mehr als 0 bis 9 Gew.-% aufweisen.

Für den thermischen Ausdehnungskoeffizienten $\alpha$ sowie die optische Dichte gilt für die vorstehenden hoch Bi-haltigen Borosilikat-Fritten:

| $\alpha$ [$*10^{-6}$/K] | | Dichte [g/cm$^3$] | |
|---|---|---|---|
| min | max | min | max |
| 4,7 | 7,9 | 2,4 | 4 |

Bei hoch Zn-haltigen Fritten, insbesondere hoch Zn-haltigen Borosilikat-Fritten kann die Glasfritte ein Glas umfassen, welches wenigstens die folgenden Bestandteile in Gew.-% auf Oxidbasis umfasst:

| Bereiche hoch Zn-haltiger Borosilikat-Fritten | | |
|---|---|---|
| ZnO | > 50 | |
| $B_2O_3$ | 10-26 | |
| $SiO_2$ | 10 -50 | |
| Summe $R_2O$ | $\leq 0,5$ | Alkalioxide |
| Summe RO | $\leq 0,5$ | Erdalkalioxide |

Die im vorstehenden Absatz angegebenen Fritten können optional einen Anteil von $Al_2O_3$ von mehr als 0 bis 9 Gew.-% aufweisen.

Für den thermischen Ausdehnungskoeffizienten $\alpha$ sowie die optische Dichte gilt für die vorstehenden hoch Zn-haltigen Borosilikat-Fritten:

| $\alpha$ [$*10^{-6}$/K] | | Dichte [g/cm$^3$] | |
|---|---|---|---|
| min | max | min | max |
| 3,5 | 5,5 | 3,2 | 4 |

Bei Borosilikat-Fritten kann die Glasfritte ein Glas umfassen, welches wenigstens die folgenden Bestandteile in Gew.-% auf Oxidbasis umfasst:

| Bereiche "Borosilikat"-Fritten | | |
|---|---|---|
| $Bi_2O_3$ | 0-15 | |
| ZnO | 0-5 | |
| $B_2O_3$ | 15-26 | |
| $SiO_2$ | 50-70 | |
| Summe $R_2O$ | 4-6,5 | Alkalioxide |

(fortgesetzt)

| Bereiche "Borosilikat"-Fritten | | |
|---|---|---|
| Summe RO | 0-2,5 | Erdalkalioxide |

Die um vorstehenden Absatz angegebenen Fritten können optional einen Anteil von $Al_2O_3$ von mehr als 0 bis 9 Gew.-% aufweisen.

Für den thermischen Ausdehnungskoeffizienten a, sowie die optische Dichte gilt für die vorstehenden Borosilikat-Fritten:

| $\alpha$ [*$10^{-6}$/K] | | Dichte [g/cm$^3$] | |
|---|---|---|---|
| min | max | min | max |
| 4 | 5,2 | 2,2 | 2,6 |

Die Paste ist also hier so ausgebildet, dass mit ihr eine Emaillebeschichtung erhalten werden kann, wobei die Glasfritte jeweils vorteilhaft ein Borosilikatglas umfasst.

Unter einer Paste wird im Rahmen der vorliegenden Offenbarung insbesondere eine sogenannte Dekor- oder Farbpaste verstanden. Allgemein umfasst die Paste insbesondere für die erste Beschichtung nach der vorliegenden Offenbarung eine Glasfritte (oder einen Glasfluss), wenigstens ein Pigment sowie zusätzlich hier vorzugsweise wenigstens eine fluide Phase, welche im Rahmen der vorliegenden Offenbarung auch als Medium oder Dispersionsmedium bezeichnet wird.

Als Medium für siebdruckfähige Beschichtungslösungen werden bevorzugt Lösungsmittel mit einem Dampfdruck von weniger als 10 bar, insbesondere von weniger als 5 bar und ganz besonders von weniger als 1 bar eingesetzt. Dies können beispielsweise Kombinationen aus Wasser, n-Butanol, Diethylenglycolmonoethylether, Tripropylenglycolmonomethylether, Terpineol, n-Butylacetat sein. Um die gewünschte Viskosität einstellen zu können, werden entsprechende organische und anorganische Additive verwendet. Organische Additive können etwa Hydroxyethyl-Cellulose und/oder Hydroxypropyl-Cellulose und/oder Xanthan-gum und/oder Polyvinylalkohol und/oder Polyethylenalkohol und/oder Polyethylenglycol, Blockcopolymere und/oder Triblockcopolymere und/oder Baumharze und/oder Polyacrylate und/oder Polymethacrylate sein. Generell eignen sich handelsübliche Siebdruckmedien auf z.B. Glykol-Basis, bzw Terpineol-Basis aber auch weitere.

Allgemein kann mit der Paste nach Ausführungsformen also eine Glasscheibe mit einer Beschichtung erhalten werden, wobei die Beschichtung eine Emailleschicht ist und ein Bindemittel, hier ausgebildet als Glasfritte (oder Glasfluss) umfasst, welches die folgenden Bestandteile in Gew.-% auf Oxidbasis umfasst:

$SiO_2$          10 bis 70
$B_2O_3$          10 bis 26
$Al_2O_3$          mehr als 0 bis 9.

Der Glasfluss oder die Glasfritte einer Paste bildet also allgemein in der aus der Paste resultierenden Beschichtung das Bindemittel, zumindest bei den "reinen" Emailleschichten. Allgemein ist es auch möglich, dass die Beschichtung neben einer Glasfritte noch ein anderes glasbasiertes Bindemittel, welches nicht aus einer Glasfritte besteht bzw. aus dieser hervorgegangen ist, umfasst, beispielsweise ein Sol-Gelbasiertes Bindemittel. In diesem Fall wird das Bindemittel der Beschichtung als Gemisch aus den unterschiedlichen Bindemitteln gebildet.

Eine Paste wie weiter oben beschrieben, insbesondere umfassend eine oder bestehend aus einer Glasfritte umfassend ein Glas umfassend wenigstens die folgenden Bestandteile in Gew.-% auf Oxidbasis umfasst:

$SiO_2$          10 bis 70
$B_2O_3$          10 bis 26
$Al_2O_3$          mehr als 0 bis 9.

kann insbesondere deshalb vorteilhaft sein, weil auf diese Weise ein Bindemittel der Beschichtung erhalten wird, welches selbst als Borosilikatglas ausgebildet ist. Solche Borosilikatgläser können nicht nur so ausgestaltet werden, dass sie einen relativ geringen Schmelzpunkt haben (hier wirkt $B_2O_3$ vorteilhaft als sogenannter Fluss, welcher die Schmelztemperatur absenkt und gleichzeitig dafür sorgt, dass das Bindemittel gut fließt und die Feststoffpartikel, also insbesondere die Pigmentpartikel und von der Beschichtung bzw. der Paste umfasste Füllstoffpartikel gut umhüllen kann), sondern weisen, wie vorstehend ausgeführt, auch eine recht hohe chemische Beständigkeit auf. Weiterhin sind solche Glasfritten bzw. die aus diesen resultierenden Bindemittel auch gut verträglich mit einem Substrat, welches aus Borosilikatglas ausgebildet ist, also insbesondere eben der hier beschriebenen Glasscheibe.

Vorzugsweise ist die Paste so ausgebildet, dass sie eine Viskosität, vorzugsweise bestimmt mittels eines Plattenviskosimeters, zwischen 1500 und 8000 mPas, bevorzugt zwischen 2000 mPas und 6500 mPas und besonders bevorzugt zwischen 2500 mPas und 5000 mPas, aufweist. Auf diese Weise ist die Paste nämlich gut mittels üblicher Auftragsverfahren großtechnisch auf Substrate, insbesondere auf Glasscheiben, auftragbar ausgestaltet. Vorteilhaft kann die Paste mittels eines Druckverfahrens, insbesondere mittels Siebdruck, auf das Substrat, also die Glasscheibe, aufgetragen werden.

Es kann aber auch vorgesehen sein, die Viskosität anders einzustellen, sodass beispielsweise eine niedrigere Viskosität erhalten wird, also beispielsweise eine Viskosität von höchstens 1500 mPas.

Die Paste ist vorzugsweise so ausgestaltet, dass die von der Paste umfasste Glasfritte einen linearen thermischen Ausdehnungskoeffizienten zwischen mindestens $2 * 10^{-6}$/K und höchstens $10 * 10^{-6}$/K aufweist, bevorzugt zwischen mindestens $3 * 10^{-6}$/K und höchstens $6 * 10^{-6}$/K. Auf diese Weise ist es möglich, dass Beschichtungen erhalten werden, welche eine ausreichende Festigkeit der Glasscheibe vorteilhaft ermöglichen, insbesondere bei vorzugsweise deckenden Beschichtungen. Vorteilhaft sind hier gerade thermische Ausdehnungskoeffizienten im Bereich zwischen mindestens $3 * 10^{-6}$/K und höchstens $6 * 10^{-6}$/K, denn diese passen hinsichtlich des thermischen Ausdehnungskoeffizienten besonders gut zu bekannten Borosilikatgläsern.

Gemäß einer weiteren Ausführungsform umfasst die Paste zwischen 0,5 Vol.-% und 50 Vol.-% Pigment, vorzugsweise weniger oder gleich als 40 Vol.-% Pigment, insbesondere in besonders bevorzugter Weise zwischen 20 und 40 Vol.-% Pigment bezogen auf den von der Paste umfassenden Feststoffanteil.

Der Gehalt an Glasfritte in der Paste liegt zwischen 99,5 Vol.-% und 50 Vol.-%, vorzugsweise zwischen 99,5 und 60 Vol-%, insbesondere vorzugsweise zwischen 80 und 60 Vol.-% bezogen auf den von der Paste umfassenden Feststoffanteil.

Auf diese Weise können nämlich - insbesondere für die vorliegend offenbarten Dicken der Beschichtung - Beschichtungen erhalten werden, die eine ausreichende Deckkraft (oder auch Blickdichte) aufweisen, bei gleichzeitig ausreichender Kratz- und Haftfestigkeit der Beschichtung.

Sofern die Beschichtung, insbesondere die erste Beschichtung, neben dem Pigment und dem Bindemittel noch einen Zusatzstoff, insbesondere einen Füllstoff, umfasst, bleibt vorzugsweise der Volumenanteil des Bindemittels in den vorgenannten Grenzen. Mit anderen Worten bleibt der Bindemittelanteil vorzugsweise bei zwischen 99,5 Vol.-% und 30 Vol.-% Glasfritte. Denn der Zusatzstoff, insbesondere in Form des Füllstoffs, dient nicht der Ausbildung einer Bindung zwischen den Partikeln der Beschichtung und deren Anbindung zum Substrat, sondern gehört selbst zum partikulären Bestandteil der Beschichtung. Vorzugsweise kann die Beschichtung bzw. die Paste daher so ausgebildet sein, dass sie allgemein 99,5 Vol.-% und 50 Vol.-% Glasfritte, bevorzugt zwischen 99,5 Vol.-% und 60 Vol.-% Glasfritte, umfasst, wobei die Volumenanteile hier jeweils auf den Feststoffanteil der Paste bezogen sind. Hinzu kommen bei der Paste zum Feststoff, welcher vom Bindemittel und den wenigstens einen Pigment oder gegebenenfalls der Summe der Pigmente und gegebenenfalls einem Zusatzstoff oder auch mehreren Zusatzstoffen gebildet wird, noch weitere Bestandteile, wie beispielsweise ein Lösungsmittel und zusätzlich gegebenenfalls ein Additiv. Der Anteil an als Füllstoff ausgebildetem Zusatzstoff beträgt vorzugsweise höchstens 25 Vol.-% und besonders bevorzugt mindestens 0,1 Vol.-%. Bevorzugte Obergrenzen für den Füllstoff können liegen bei 20 Vol.-% oder 15 Vol.-%, wobei bevorzugte Untergrenzen liegen können bei 1 Vol.-% und 5 Vol. Dabei sind die Volumenanteile hier jeweils auf den Feststoffanteil der Paste bezogen. Sofern die Paste und/oder die Beschichtung mehrere als Füllstoffe ausgebildete Zusatzstoffe umfasst, wird hier auf den Gesamtgehalt an Füllstoff abgestellt. Der Anteil an Pigment liegt zwischen 0,5 Vol.-% und 50 Vol.-% Pigment, vorzugsweise weniger oder gleich als 40 Vol.-% Pigment, insbesondere in besonders bevorzugter Weise zwischen 20 und 40 Vol.-% Pigment, wobei die Volumenanteile hier jeweils auf den Feststoffanteil der Paste bezogen sind. Sofern die Paste mehrere Pigmente umfasst, wird hier auf die Summe des Pigmentgehalts abgestellt.

Die Paste kann weiterhin gemäß einer Ausführungsform so ausgestaltet sein, dass sie einen Zusatzstoff umfasst, wobei der Zusatzstoff ausgebildet ist, den resultierenden linearen thermischen Ausdehnungskoeffizienten der Beschichtung im Vergleich zu einer Zusammensetzung der Beschichtung ohne den Zusatzstoff zu erniedrigen, wobei der Zusatzstoff bevorzugt ein Blähmittel oder ein Füllstoff ist, wobei besonders bevorzugt der Zusatzstoff ein Füllstoff mit einem linearen thermischen Ausdehnungskoeffizienten zwischen $-10 * 10^{-6}$/K und $+10 * 10^{-6}$/K ist. Bevorzugt liegt der lineare thermische Ausdehnungskoeffizient zwischen $-8 * 10^{-6}$/K und $+5 * 10^{-6}$/K, besonders bevorzugt zwischen $-6,5 * 10^{-6}$/K und $+3 * 10^{-6}$/K.

Diese Ausführung kann insbesondere dann vorteilhaft sein, wenn die Beschichtung so ausgebildet ist, dass sie mehrere Zusatzstoffe in Form von Füllstoffen umfasst und der erste von der ersten Beschichtung umfasste Zusatzstoff in Form eines Füllstoffs selbst einen anderen thermischen Ausdehnungskoeffizienten aufweist, beispielsweise, weil der Füllstoff der Verbesserung anderer Eigenschaften der Beschichtung dient, beispielsweise der Verbesserung der Kratzfestigkeit.

Gemäß einer bevorzugten Ausführungsform ist die Paste so ausgestaltet, dass die Glasfritte einen färbenden Bestandteil umfasst. Mit anderen Worten ist die Glasfritte hier also so ausgebildet, dass sie kein ungefärbtes Glas umfasst oder aus einem solchen besteht, sondern gefärbt vorliegt, vorzugsweise volumengefärbt, also durch färbende Ionen gefärbt, oder gefärbt durch Kristallphasen, die bei der Frittenherstellung oder beim Einbrand der Farbe entstehen. Vorteilhaft ist eine solche Ausgestaltung gerade bei geringen Pigmentgehalten, wie dies auch weiter oben ausführlich beschrieben ist.

Hierbei wird darauf hingewiesen, dass die Paste und die jeweilige Beschichtung zueinander in der Beziehung, dass die jeweilige Beschichtung aus dem Feststoffbestandteil der Paste gebildet wird. Mit anderen Worten umfasst die jeweilige Beschichtung das Bindemittel, welches in der Paste als Glasfritte vorliegt, sowie die partikulären Bestandteile, insbesondere das wenigstens eine Pigment und ggf. mehrere Pigmente und/oder Zusatzstoffe, beispielsweise Füllstoffe. Die Beschichtung umfasst nicht bzw. nur in Spuren eventuelle fluide Bestandteile der Paste, wie Lösungsmittel, denn dieser werden beim Einbrand ausgebrannt.

Allgemein wird darauf hingewiesen, dass es vorliegend auch möglich ist, die erste Beschichtung durch eine Paste zu erhalten, die als Bindemittel keine Glasfritte oder nicht nur eine Glasfritte umfasst, sondern ein Bindemittel beispielsweise auf Sol-Gel-Basis. Allerdings ist eine solche Ausgestaltung in der Regel nicht bevorzugt, denn solche Pasten neigen dazu, schwerer verarbeitbar zu sein als Pasten, welche nur eine Glasfritte als Bindemittel umfassen. Insbesondere ist die Topfzeit solcher Sol-Gelbasierter bzw. Sol-Gel-umfassender Pasten in der Regel gering, und die Viskosität kann für übliche großtechnische Auftragsverfahren, wie beispielsweise Siebdruck, ungünstig sein.

Ein weiterer Aspekt der vorliegenden Offenbarung betrifft einen Verbund umfassend eine zumindest bereichsweise beschichtete Glasscheibe nach einer Ausführungsform der Offenbarung sowie eine weitere Glasscheibe, wobei vorzugsweise die Beschichtung zwischen den Glasscheiben angeordnet ist. Weiterhin umfasst der Verbund vorzugsweise eine polymerische Lage, welche gleichfalls zwischen den Glasscheiben angeordnet ist und diese miteinander verbindet. Die polymerische Lage kann beispielsweise als Folie zwischen den beiden Glasscheiben vorliegen, aber es ist auch möglich, die polymerische Lage zunächst in flüssiger Form aufzubringen, wobei beim Verbinden der beiden Glasscheiben die polymerische Flüssigkeit zu einer polymerischen Lage aushärtet.

Die mechanische Beständigkeit bzw. die Qualität des Verbundes wird in der Regel überprüft im sogenannten "Pummeltest". Allgemein gilt, dass bei der Zerstörung des Verbundes, welches beispielsweise auch als "Verbundsicherheitsglas" bezeichnet werden kann, die Glasbruchstücke an der polymerischen Lage, beispielsweise ausgestaltet als PVB-Folie, zwischen den Glasscheiben des Verbundes haften bleiben müssen. Überprüft wird dies mit dem "Pummeltest", bei welchem ein Verbundglas umfassend zwei Glasscheiben mit einer maximalen Dicke von $2 * 4$ mm auf einer geneigten Metallunterlage mit einem Hammer bearbeitet wird (to pummel = schlagen). Dabei wird das Glas durch die mechanische Einwirkung zerstört. Anschließend erfolgt die visuelle Begutachtung. Das Haftungsniveau wird je freigelegter Folienfläche bzw. freigelegter Fläche der polymerischen Lage in "Pummelwerte" eingeteilt zwischen 0 und 10, wobei höhere Werte für ein besseres Haften der Glasbruchstücke auf der polymerischen Lage stehen.

Ist die polymerische Lage als PVB ausgebildet, wird die Probe zuvor auf -18°C gekühlt, da ansonsten die Glasbruchstücke in die polymerische Lage eingedrückt würden. Handelt es sich bei den Glasscheiben der Probe jeweils um Floatglasscheiben, werden beide Glasplatten des Verbundglases geprüft. Es hat sich nämlich gezeigt, dass sogenannte "Zinnbadseiten" schlechtere Werte im Pummeltest liefern als die Feuerseiten, also die im Floatverfahren oben ausgebildete Seite der Glasscheibe.

Beispiele

Die Erfindung wird im Folgenden anhand von Beispielen näher erläutert.

Die Glasscheibe nach der vorliegenden Offenbarung umfasst ein Glas umfassend $SiO_2$ und $B_2O_3$.

Gemäß einem ersten Ausführungsbeispiel kann das Glas gegeben sein durch eine Zusammensetzung aufweisend die folgenden Komponenten, jeweils angegeben in Gew.-% auf Oxidbasis:

| | |
|---|---|
| $SiO_2$ | 60 bis 85, besonders bevorzugt bis 82 |
| $B_2O_3$ | 7 bis 26 |
| $Al_2O_3$ | 0 bis 12, vorzugsweise größer als 0 bis 11, besonders bevorzugt bis 7 |
| $Li_2O$ | 0 bis 1 |
| $Na_2O$ | 0,5 bis 6 |
| $K_2O$ | 0 bis 3 |
| MgO | 0 bis 6 |
| CaO | 0 bis 5 |

(fortgesetzt)

| | |
|---|---|
| SrO | 0 bis 4 |
| ZnO | 0 bis 3 |
| $ZrO_2$ | 0 bis 3. |

Weiterhin können noch sonstige Bestandteile, wie sie in der Glasherstellung üblicherweise zum Einsatz kommen, umfasst, sein, beispielsweise Läutermittel. Diese sind in der Regel in einem Gehalt von nicht mehr als 2 Gew.-% vom Glas umfasst.

Bei den folgenden Zusammensetzungen können Abweichungen von 100% im gesamten Gewichtsanteil aufgrund analysebedingter Rundungsfehler auftreten.

Ein beispielhaftes Glas ist gegeben im folgenden Zusammensetzungsbereich in Gew.-% auf Oxidbasis:

| | |
|---|---|
| $SiO_2$ | 75 - 85 |
| $B_2O_3$ | 10-15 |
| $Al_2O_3$ | 1-3 |
| $Na_2O$ | 2-5 |
| $K_2O$ | 0-1 |
| NaCl | weniger als 0,5 |

Eine beispielhafte Zusammensetzung eines Glases in diesem Zusammensetzungsbereich in Gew.-% auf Oxidbasis ist wie folgt gegeben:

| | |
|---|---|
| $SiO_2$ | 80,8 |
| $B_2O_3$ | 12,7 |
| $Al_2O_3$ | 2,4 |
| $Na_2O$ | 3,5 |
| $K_2O$ | 0,6 |
| NaCl | 0,1 |

Ein weiteres Glas ist gegeben im folgenden Zusammensetzungsbereich in Gew.-% auf Oxidbasis:

| | |
|---|---|
| $SiO_2$ | 73-83 |
| $B_2O_3$ | 8-12 |
| $Al_2O_3$ | 1-4 |
| $Na_2O$ | 2-4 |
| $K_2O$ | 1-3 |
| MgO | 1-3 |
| CaO | 1-3 |

Eine nochmals weitere beispielhafte Zusammensetzung eines Glases in diesem Zusammensetzungsbereich in Gew.-% auf Oxidbasis ist wie folgt gegeben:

| | |
|---|---|
| $SiO_2$ | 78,1 |
| $B_2O_3$ | 9,8 |
| $Al_2O_3$ | 2,5 |
| $Na_2O$ | 2,8 |
| $K_2O$ | 2,5 |
| MgO | 1,8 |
| CaO | 2,5 |

Solche Gläser im weiter oben genannten Zusammensetzungsbereich, insbesondere mit den konkreten, vorstehend beispielhaft genannten Zusammensetzungen, sind vorteilhaft, weil sie nicht nur thermische Ausdehnungskoeffizienten aufweisen, welche vorteilhaft zwischen $2 * 10^{-6}$/K und $6 * 10^{-6}$/K, je nach genauer Zusammensetzung liegen können, sondern vielmehr auch, weil sie ausreichende mechanische Beständigkeiten, beispielsweise auch gegenüber Oberflächenbelastungen, aufweisen können.

Insbesondere ist es mit solchen Zusammensetzungen auch möglich, eine Glasscheibe zu erhalten, welche im unbeschichteten Bereich nach einem sogenannten Splittrieseltest eine nur geringe Streuung aufweist. der Splittrieseltest wird dabei wie nachfolgend kurz erläutert durchgeführt:

In einem nach unten geöffneten Behälter befinden sich Splittteilchen, welche aus dem Behälter in ein Freifallrohr eintreten und dieses nach einer Freifallstrecke in Richtung auf eine Scheibe verlassen konnten, auf welche die Splittteilchen mit jeweils einem definierten Teilchenimpuls $Pr_{(iesel)}$ auftreffen, der durch die jeweilige Teilchenmasse und die entlang der Freifallstrecke F gewonnene Geschwindigkeit $V_{max}$ definiert wird.

Zur Vermeidung von Anhaftungen werden die Splittteilchen jeweils vor der Durchführung des Splittrieseltests getrocknet, sodass sichergestellt ist, dass jeweils nur ein einziges Teilchen unabhängig von jeweils anderen Teilchen und nicht zusammenhängende Teilchenagglomerate auf die Scheibe auftreffen.

Die Scheibe kann jeweils unter einem verschiedenen Neigungswinkel $\alpha$' angeordnet werden, wobei dieser Neigungswinkel $\alpha$' jeweils der Winkel zu einer waagerechten Ebene ist, zu welcher sich die Splittteilchen senkrecht verlaufend bewegen, bis diese jeweils auf die Scheibe auftreffen.

Der vorstehend beschriebene Splittrieseltest wird jeweils so lange für einen definierten Neigungswinkel $\alpha$' durchgeführt, bis eine - zuvor definierte - Gesamtmenge an Splittteilchen auf die Scheibe aufgetroffen ist.

Durch die in diesem Test verursachte Schädigung der Glasoberfläche führt zur Streuung /bzw. Haze), welche messtechnisch bestimmt werden kann. Diese Messung des Haze /dr Streuung erfolgt vorzugsweise jeweils gemäß ASTM D1003 (CIE C) mit einem entsprechend geeichten Haze-Messgerät, beispielsweise dem Gerät Haze-Gard plus AT-4725, der Firma BYK-Gardner. Verwendet werden können hier insbesondere solche Glasscheiben, welche im unbeschichteten Bereich einen Haze-Wert nach Splittrieseltest wie vorstehend beschrieben von weniger als 6% aufweisen, vorzugsweise für Werte für den Neigungswinkel $\alpha$' zwischen 15° und 60°.

Glasscheiben, welche solche Gläser umfassen, können insbesondere vorteilhaft unbeschichtet Festigkeit zwischen 100 MPa und 210 MPa, vorzugsweise höchstens 200 MPa, aufweisen.

Solche Gläser weisen vorzugsweise sehr hohe chemische Beständigkeiten auf. Diese können beispielsweise in Säure- (S), Laugen (L)- und hydrolytische (H) Beständigkeit unterschieden werden. Die Beständigkeit, gegeben in den Klassen H, S, L, beträgt vorzugsweise gemäß einer Ausführungsform H = 1, S = 1, L = 1 - 3. Bestimmt wird die chemische Beständigkeit jeweils nach den folgenden Normen:

- Hydrolytische Beständigkeit gemäß ISO 719 / DIN 12 111 HGB 1; gemäß ISO 720 = HGA 1, d.h. je nach durchgeführter Testung steht H entweder für HGA oder HGB.
- Säurebeständigkeit gemäß DIN 12 116; kann aber auch durchgeführt werden nach ISO 1776, wobei dann hier Werte von $\leq$ 100 $\mu$g $Na_2O$ je 100 $cm^2$ erhalten werden.
- Laugenbeständigkeit gemäß ISO 695 / DIN 52322; hier wird die Klasse A2 erhalten.

Als Pigmente können allgemein übliche keramische Farbkörper verwendet werden, insbesondere Spinell-basierte Pigmente, wie beispielsweise Chrom-Kupfer-Spinelle, Eisen-Nickel-Chrom-Spinelle oder Ferrit oder Hämatit. Auch andere Oxide, wie Eisen-Manganoxide oder Eisen-Chromoxide, können prinzipiell verwendet werden, beispielsweise auch $TiO_2$. Übliche Pigmentgrößen können zwischen durchschnittlich 0,15 $\mu$m bis zu 5 $\mu$m liegen, wobei der $d_{90}$-Wert, bezogen auf den Äquivalentdurchmesser, bei bis zu 15 $\mu$m liegen kann. Feinere Partikelgrößen können allerdings bevorzugt sein, da sich diese besser verdrucken lassen.

Zusatzstoffe können allgemein beispielsweise Schäumungsmittel sein. Schäumungsmittel können im Rahmen der vorliegenden Offenbarung auch allgemein als Blähmittel oder Porenformer bezeichnet werden. Insbesondere können als Schäumungsmittel verwendet werden Stärken, beispielsweise Maisstärke, Reisstärke, Weizenstärke, Kartoffelstärke oder Maniok oder Mischungen hiervon. Weiterhin ist es möglich, hierfür Zucker zu verwendet, beispielsweise Maltose, Glucose, Fructose und/oder Saccharose oder Mischungen hiervon. Die genannten Stärken zersetzen sich bei Temperaturen um 200°C; die Zucker hingegen bei geringeren Temperaturen zwischen ca. 100°C und 150°C, je nach genauer Verbindung.

Alternativ oder zusätzlich können als Zusatzstoffe aber auch Füllstoffe verwendet werden. Diese weisen eine mittlere Korngröße vom nm-Bereich bis in den $\mu$m-Bereich auf.

Insbesondere können hier zum Einsatz kommen Kieselsäuren, beispielsweise pyrogene oder gefällt Kieselsäuren, mit Partikelgrößen von weniger als 1$\mu$m, beispielsweise von nur 0,1 $\mu$m oder sogar weniger, beispielsweise nur 0,04 $\mu$m, und je nach Herstellungsverfahren unterschiedlicher Oberfläche. Kieselsäuren sind daher vorteilhaft, weil sie recht geringe thermische Ausdehnungskoeffizienten aufweisen von etwa $0,5 * 10^{-6}$/K. Ebenfalls möglich ist es, negativ dehnende Füllstoffe, wie beispielsweise Cordierit oder $\beta$-Eukryptit (welcher einen thermischen Ausdehnungskoeffizienten von - 1,1 bis -6,5 $* 10^{-6}$/K aufweist) zu verwenden. Solche Füllstoffe können beispielsweise Partikelgrößen um 1 $\mu$m

oder mehr aufweisen, beispielsweise von 1,5 $\mu$m oder von 1,2 $\mu$m.

Andere Füllstoffe sind zum Beispiel runde Partikel mit Korngrößen, vorzugsweise bezogen auf den Äquivalentdurchmesser, insbesondere den volumenäquivalenten Äquivalentdurchmesser, vorzugsweise auf den $d_{50}$-Wert des Äquivalentdurchmessers, zwischen 1 und 20 $\mu$m, bevorzugt zwischen 1 und 5 $\mu$m, damit diese nicht aus der finalen Beschichtung herausragen. Beispielsweise kann dies mittels eines Quarzglas-Füllstoffs umfassend kugelige Partikel, wie beispielsweise dem im Rahmen der vorliegenden Offenbarung beispielhaft verwendeten Füllstoff erzielt werden, bei welchem die Partikel Durchmesser zwischen 1 $\mu$m und 5 $\mu$m aufweisen. Es handelt sich hierbei um ein hochreines, sphärisches Quarzglas. Prinzipiell sind aber auch andere Quarz-, Quarzglas- und Quarz-Vorstufen-Kugeln als Füllstoffe verwendet werden.

Es ist auch möglich, spezielle, poröse Füllstoffe zu verwenden. Beispielsweise bevorzugt sind poröse Gläser, wie sie beispielsweise unter dem Namen "CoralPor®" erhältlich sind, und poröse kristalline Materialien. Bei den unter der Marke "CoralPor" vertriebenen und hier verwendeten Füllstoffen handelt es sich um Borosilikatgläser, welche so thermisch und chemisch behandelt wurden, dass eine offene Porosität gezielt eingestellt wird. Generell ist es allgemein möglich, als poröse Gläser nano- und makroporöse Multikomponentengläser mit niedrigem Ausdehnungskoeffizienten einzusetzen, die eine starre amorphe Mikrostruktur aufweisen. Prinzipiell sind auch andere niedrig dehnende poröse Glaspulver geeignet, nicht nur die hier beispielhaft verwendeten CoralPor®-Produkte. Ein Beispiel für poröse kristalline Materialien sind solche auf Zeolith-Basis.

Der Füllstoff kann auch in-situ entstehen, beispielsweise durch Zersetzung einer metallorganischen oder siliziumorganischen Komponente. Dies wurde vorliegend beispielhaft durch die Zugabe des Silikonharzes, welches unter der Marke Silres® vertrieben wird, gezeigt. Es handelt sich hierbei um ein Silikonharz, welches sich beim Erhitzen zu SiOC umwandelt und damit zu einem gräulichen Füllstoff führt. Prinzipiell sind neben Silres® auch andere sich zersetzende Silikonharze geeignet.

Im Folgenden sind einige beispielhafte Frittenzusammensetzungen zusammengestellt. Die Angabe der Komponenten erfolgt dabei in der folgenden Tabelle in Gew.-% auf Oxidbasis. Weiterhin können noch sonstige Bestandteile, wie sie in der Glasherstellung üblicherweise zum Einsatz kommen, umfasst, sein, beispielsweise Läutermittel. Diese sind in der Regel in einem Gehalt von nicht mehr als 2 Gew.-% vom Glas umfasst.

| Beispiel | 1 | 2 | 3 | 4 | 5 | 6 | 7 | 8 | 9 | 10 | 11 |
|---|---|---|---|---|---|---|---|---|---|---|---|
| $Al_2O_3$ | 8,2 | 7,2 | 5,4 | 0,6 | 5,9 | 0,10 | 1,00 | 5,1 | 5,3 | 5,0 | 2,0 |
| $B_2O_3$ | 18 | 22,8 | 24,0 | 24,6 | 21,5 | 15,70 | 12,75 | 21,9 | 22,9 | 23,4 | 8,3 |
| BaO | | | | | | | | | | | |
| $Bl_2O_3$ | 14 | 10,0 | 10,0 | | | | | | | 11,0 | 43,25 |
| CaO | | | | 1,3 | 1,2 | | | 0,5 | 0,5 | | 0,1 |
| CoO | | | | | 2,9 | | | | | | |
| $K_2O$ | | | | 0,1 | | | | 1,7 | 1,8 | 0,8 | 1,75 |
| $Li_2O$ | | 3,2 | 4,4 | | 4,9 | | | 0,8 | 0,8 | 4,8 | 0,8 |
| MgO | | | | 0,3 | | | | | | | |
| $Na_2O$ | 5,2 | 1,2 | 0,2 | 6,1 | | | | 2,4 | 2,5 | | 2,75 |
| $SiO_2$ | 55 | 55,6 | 56,0 | 66,6 | 58,0 | 32,70 | 24,25 | 63,4 | 66,2 | 55,0 | 29,5 |
| SrO | | | | | 1,0 | | | | | | |
| $TiO_2$ | | | | | | | | | | | 1,6 |
| ZnO | | | | 0,4 | 3,3 | 51,50 | 62,00 | | | | 8,9 |

Im Folgenden sind einige Beschichtungszusammensetzungen der ersten Beschichtung sowie einige Pastenzusammensetzungen mit und ohne Zusatzstoffen aufgeführt.

Hergestellte Beschichtungen, insbesondere erste Beschichtungen mit diesen Frittenzusammensetzungen zeigten, dass entweder ein niedriger Pigmentgehalt (< 7,5 Vol.-%) beziehungsweise ein höherer Pigmentgehalt ($\geq$ 20 Vol.-%) vorteilhaft für die mechanischen Eigenschaften der zumindest bereichsweise beschichteten Scheibe sein können. Im ersten Fall ist der $\alpha$-Mismatch, somit die Differenz der thermischen Ausdehnungskoeffizienten, zwischen der Beschichtung, insbesondere ersten Beschichtung, und der Glasscheibe vorteilhaft, im letzteren bilden sich Poren in der Beschichtung, insbesondere in der ersten Beschichtung, die bis zu einem Gehalt von 37,5 Vol.-% Pigment vorteilhaft sind. Danach ist die Beschichtung in der Regel für die Zwecke der vorliegenden Erfindung zu porös.

In der nachfolgenden Tabelle sind beispielhafte Beschichtungszusammensetzungen für die erste Beschichtung umfassend ein Bindemittel, hier eine Glasfritte, und Pigment aufgeführt.

Schichten nur mit Pigment

| Beispiel | Schicht (Vol.-%) | | Schicht (Gew.-%) | |
|---|---|---|---|---|
| | Fritte | Pigment | Fritte | Pigment |
| 1 | 65 | 35 | 45,5 | 54,5 |
| 2 | 80 | 20 | 64,1 | 35,9 |
| 3 | 90 | 10 | 80,2 | 19,8 |
| 4 | 92,5 | 7,5 | 84,7 | 15,3 |

Beschichtungen können erhalten werden mit den folgenden Pasten (Die Nummerierung der Pasten und der Beschichtungen stimmt hierbei überein):

| Bsp. | Fritte 3 | Pasten (Gew.-%) Spinell-Pigment | Medium |
|---|---|---|---|
| 1 | 32,51 | 38,96 | 28,53 |
| 2 | 45,5 | 25,5 | 29 |
| 3 | 56,8 | 14,0 | 29,3 |
| 4 | 59,8 | 10,8 | 29,3 |

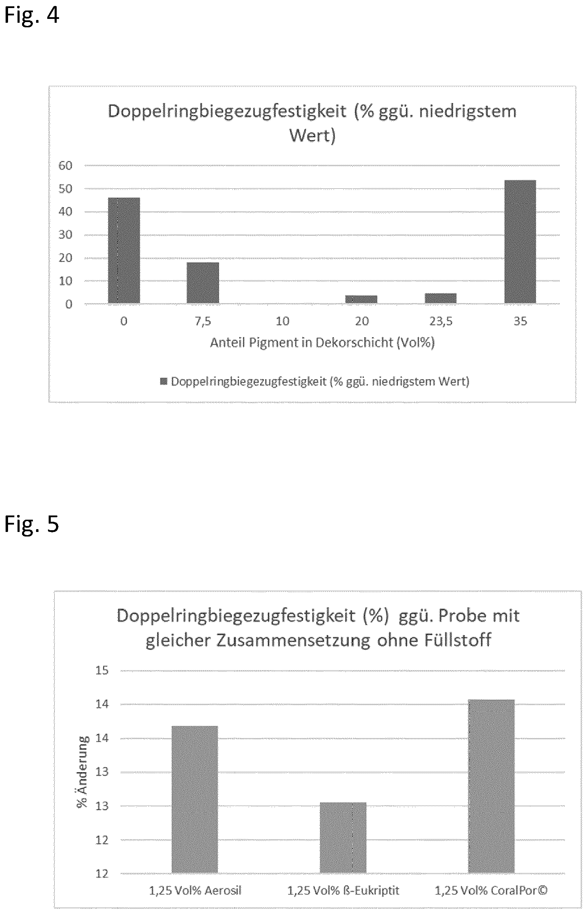

Figur 4 zeigt eine entsprechende Darstellung der Ergebnisse von Messungen der Biegezugfestigkeit an verschiedenen gemäß der vorliegenden Offenbarung beschichteten Glasscheiben, wobei für die verschiedenen Messpunkte der Gehalt der Fritte und der Pigmente jeweils variiert wurde. Die Biegezugfestigkeit wurde jeweils mit einem Doppelringverfahren gemäß DIN 1288-5 ermittelt. Dabei war der jeweilige der Messung unterzogene Bereich der Glasscheibe jeweils vollflächig beschichtet, sodass unbeschichtete Bereiche der Glasscheibe auf die Messungen im Wesentlichen keinen Einfluss auf die Messergebnisse hatten. Dieser Figur ist insbesondere der Einfluss des Anteils der Pigmente auf die Biegezugfestigkeit gut zu entnehmen.

Eine Hinzugabe von niedrig dehnenden Füllstoffen führt überaschenderweise schon bei niedrigen Zugaben zu einer Erhöhung der mechanischen Festigkeit. Zugabe von mehr als 30 Vol% niedrig dehnendem Füllstoff, welcher nicht und somit insbesondere nicht in der Beschichtung gefärbt ist, führt bei den vorliegend für die Beschichtung offenbarten Dicken zu einer Herabsetzung der Opazität/optischen Dichte unterhalb 1,5 und ist für die Anwendung regelmäßig nicht geeignet. Diesem kann mit mehr Pigmentgehalt gegengesteuert werden. Dies ist beispielhaft in den beiden nachfolgenden Tabellen gezeigt.

In der folgenden Tabelle sind Zusammensetzungen von Beschichtungen umfassend einen Zusatzstoff, nämlich hier jeweils Füllstoff, angegeben:

| Nr. | | Schicht Vol.-% | | | Schicht Gew.-% | | |
|---|---|---|---|---|---|---|---|
| | | Fritte | Pigment | Füllstoff | Fritte | Pigment | Füllstoff |
| 5 | 1,25 Vol.-% extra Füllstoff | 75,5 | 23,25 | 1,25 | 58,8 | 40,1 | 1,1 |
| 6 | 10 Vol.-% extra Füllstoff | 69,5 | 21,4 | 9 | 55,5 | 37,9 | 6,6 |
| 7 | Pigmentvariation + 10 Vol.-% Füllstoff | 76,5 | 13,5 | 10 | 66,2 | 26 | 7,8 |
| 8 | Pigmentvariation + 10 Vol.-% Füllstoff | 65 | 15 | 20 | 55,8 | 28,6 | 15,6 |

| Nr. | | Schicht Vol.-% | | | Optische Dichte |
|---|---|---|---|---|---|
| | | Fritte | Pigment | Füllstoff | |
| 9 | Füllstoff Kieselsäure | 75,6 | 23,2 | 1,2 | 2,9 |
| 10 | Füllstoff β-Eukryptit | 75,6 | 23,2 | 1,2 | 2,3 |

(fortgesetzt)

| Nr. | | Schicht Vol.-% | | | Optische Dichte |
|---|---|---|---|---|---|
| | | Fritte | Pigment | Füllstoff | |
| 11 | Füllstoff poröses Glas | 75,6 | 23,2 | 1,2 | 2,3 |
| 12 | Füllstoff β-Eukryptit | 66,55 | 20,45 | 13 | 1,7 |
| 13 | Füllstoff Kieselsäure | 66,55 | 20,45 | 13 | 1,4 |
| 14 | Füllstoff Quarzglaskugel | 66,55 | 20,45 | 13 | 1,7 |
| 15 | Füllstoff Kieselsäure | 55 | 35 | 10 | 2,6 |
| 16 | Füllstoff Kieselsäure | 60 | 30 | 10 | 2,2 |
| 17 | Füllstoff Silikonharz/SiOC | 75,6 | 23,2 | 1,2 | 1,8 |
| 18 | Füllstoff Silikonharz/SiOC | 72,8 | 22,4 | 4,8 | 1,8 |
| 19 | Füllstoff Silikonharz/SiOC | 66,5 | 20,5 | 13 | 1,9 |
| A | Vergleich | 76,5 | 23,5 | - | 2,5 |
| B | Vergleich | 65 | 35 | - | 3 |

Solche Beschichtungen können erhalten werden mit Pasten, wie sie in der nachfolgenden Tabelle aufgeführt sind (auch hier korrespondieren die Nummerierung von Beschichtung und Paste zu deren Herstellung):

| | Pasten (Gew.-%) | | | |
|---|---|---|---|---|
| | Fritte | Pigment | Füllstoff | Medium |
| 5 | 40,60 | 27,70 | 0,7 | 31,00 |
| 6 | 37,5 | 25,6 | 4,4 | 32,5 |
| 7 | 44,7 | 17,6 | 5,3 | 32,4 |
| 8 | 37,5 | 19,2 | 10,4 | 32,9 |

Figur 5 zeigt eine entsprechende Darstellung der Ergebnisse von Messungen der Biegezugfestigkeit an verschiedenen gemäß der vorliegenden Offenbarung beschichteten Glasscheiben, wobei für die verschiedenen Messpunkte verschiedene Füllstoffe, nämlich eine pyrogene Kieselsäure, β-Eukryptit und CoralPor® jeweils mit einem Anteil von 1,25 Vol% verwendet wurden. Die Biegezugfestigkeit wurde jeweils mit einem Doppelringverfahren gemäß DIN 1288-5 ermittelt. Dabei war der jeweilige der Messung unterzogene Bereich der Glasscheibe jeweils vollflächig beschichtet, sodass unbeschichtete Bereiche der Glasscheibe im Wesentlichen keinen Einfluss auf die Messergebnisse hatten. Dieser Figur ist insbesondere der Einfluss des Anteils der Pigmente auf die Biegezugfestigkeit gut zu entnehmen.

In der folgenden Tabelle sind die Beschichtungen 20 bis 23 aufgeführt, welche als Zusatzstoff ein Blähmittel umfassen. Der Zusatz des Blähmittels ist dabei so kalkuliert, dass die in der ersten Spalte angegebene zusätzliche Porosität resultiert.

| | Porosität | Schicht Vol.-% (ohne Poren) | | | Schicht Vol.-% (mit Poren) | | | Schicht Gew.-% (mit Poren) | | |
|---|---|---|---|---|---|---|---|---|---|---|
| | | Fritte | Pigment | Blähmittel | Fritte | Pigment | Blähmittel | Fritte | Pigment | Blähmittel |
| 20 | 5 Vol% | 75 | 25 | 5 | 71,4 | 23,8 | 4,8 | 56,1 | 41,6 | 2,3 |
| 21 | 10 Vol% | 76,5 | 23,5 | 10 | 69,5 | 21,4 | 9,1 | 56,7 | 38,7 | 4,6 |
| 22 | 20 Vol% | 82,5 | 17,5 | 20 | 68,7 | 14,6 | 16,7 | 61,7 | 29,1 | 9,2 |
| 23 | 25 Vol% | 80 | 20 | 25 | 64 | 16 | 20 | 57,2 | 31,8 | 11 |

Solche Beschichtungen können erhalten werden mit den Pasten 20 bis 23 in der nachfolgenden Tabelle. Die Nummerierung der nachfolgend offenbarten Pasten 20 bis 23 entspricht jeweils der Nummerierung der Beschichtungen in der vorstehenden Tabelle.

| Paste Nr. | Pasten (Gew.-%) (inklusive Porenformer) | | | |
|---|---|---|---|---|
| | Fritte | Pigment | Blähmittel/ Porenformer | Medium |
| 20 | 37,9 | 28,1 | 1,6 | 32,4 |
| 21 | 39,1 | 26,7 | 3,2 | 31 |
| 22 | 41,7 | 19,7 | 6,2 | 32,4 |
| 23 | 38,1 | 21,2 | 7,4 | 33,3 |

Durch die Zugabe von Schäumungsmittel oder Blähmittel wird eine gezielte, geschlossene Porosität in die erste Beschichtung eingebracht. Dabei müssen die Poren klein genug sein, um in der gewählten Schichtdicke, dies bedeutet in der gewählten Dicke der ersten Beschichtung sowie bei der weiteren Ausführungsform der ersten Dicke zusammen mit der Dicke der Zwischenschicht zu verbleiben. Eine Erhöhung der Porenzugabe über 25 Vol.-% führt zu einem krisseligen Erscheinungsbild und Herabsetzung der Opazität.

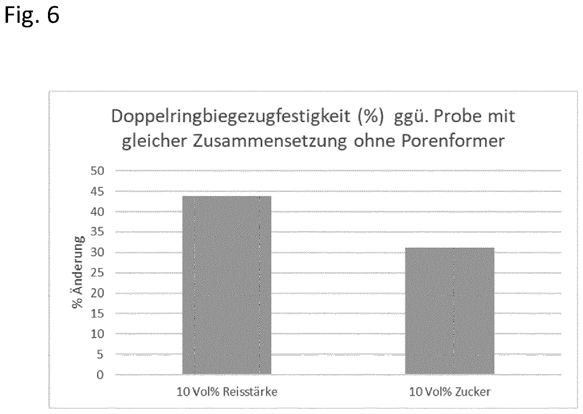

Figur 6 zeigt eine entsprechende Darstellung der Ergebnisse von zwei Messungen der Biegezugfestigkeit an verschiedenen gemäß der vorliegenden Offenbarung beschichteten Glasascheiben, wobei für den ersten Messpunkt Reisstärke und für den zweiten Messpunkt Zucker jeweils mit einem Anteil von 10 Vol.-% als Blähmittel verwendet wurden. Die Biegezugfestigkeit wurde jeweils mit einem Doppelringverfahren gemäß DIN 1288-5 ermittelt. Dabei war der jeweilige der Messung unterzogene Bereich der Glasscheibe jeweils vollflächig beschichtet, sodass unbeschichtete Bereiche der Glasscheibe auf die Messungen im Wesentlichen keinen Einfluss auf die Messergebnisse hatten. Dieser Figur ist insbesondere der Einfluss des Anteils der Pigmente auf die Biegezugfestigkeit gut zu entnehmen.

Es hat sich herausgestellt, dass bereits ein Füllstoffgehalt von größer oder gleich 1,0 Vol.-%, bezogen auf den Feststoffgehalt, sehr vorteilhaft sein kann, um die Festigkeit der Glasscheibe zu erhöhen im Vergleich zu Beschichtungen, welche keinen Füllstoff umfassen. Wie ausgeführt, ist eine eventuell zu geringe optische Dichte bei Füllstoffgehalt durch eine Erhöhung des Pigmentanteils kompensierbar.

Allgemein kann der Gehalt an Zusatzstoff, insbesondere der Füllstoffgehalt, bis zu 20 Vol.-% oder sogar bis zu 25 Vol.-% oder sogar bis zu 27 Vol.-% betragen, auch hier wieder bezogen auf den Gesamtfeststoffgehalt der Beschichtung. Weiterhin hat sich allgemein gezeigt, dass es vorteilhaft sein kann, wenn der Gehalt der Beschichtung an Pigment im Vergleich zu verwendetem Zusatzstoff, insbesondere zu verwendetem Füllstoff, hoch ist, beispielsweise das Volumenverhältnis Zusatzstoff zu Pigment, insbesondere Füllstoff zu Pigment, zwischen allgemein 1:2 und 1:7, vorzugsweise zwischen, insbesondere der Gehalt Füllstoff zu Pigment, zwischen 1: 2 und 1:5, insbesondere vorzugsweise zwischen 1:3 und 1:4, beträgt. Trotz dieses Verhältnisses ist es überraschenderweise so, dass die Farbkoordinaten solcher Schichten nicht stark von denjenigen abweichen, bei welchen ein geringeres Verhältnis von Zusatzstoff zu Pigment, insbesondere von Füllstoff zu Pigment, eingestellt wurde oder bei welchen gar kein Zusatzstoff, beispielsweise gar kein Füllstoff, zugegeben wurde.

Besonders vorteilhafte Eigenschaften können erhalten werden, wenn hohe Gehalte an Pigmenten, also beispielsweise von nahezu 40 Vol.-%, mit mittleren Gehalten an Füllstoffen, also beispielsweise von 8 bis 15 Vol.-% Füllstoff, kombiniert werden. Diese Angaben beziehen sich allgemein auf alle verwendeten Pigmente und Füllstoffe, also auf den Gesamtgehalt der Beschichtung an Pigment und Füllstoff. Auf diese Weise kommt es vorteilhaft zu einer besonders hohen Festigkeit der Glasscheibe bei einer überraschenderweise gleichzeitig noch ausreichenden Kratzfestigkeit bzw. Abriebfestigkeit der resultierenden Beschichtung.

Die nachfolgende Tabelle listet einige Zusammensetzungen von Beschichtungen nach Ausführungsformen, welche sich als besonders vorteilhaft herausgestellt haben. Die Angaben in der nachfolgenden Tabelle beziehen sich auf das Volumen der resultierenden Beschichtung, die Angaben erfolgen also in Vol.-%. Als Füllstoffe verwendet wurde eine pyrogene Kieselsäure, β-Eukryptit, ein poröser Füllstoff (CoralPor®) sowie die Füllstoffe Quarzglaskugeln ($d_{50}$ zwischen 1 und 5 μm) und sich zu einem Feststoff (SiOC) zersetzendes Silikonharz (Silres ®).

| Nr. | Fritte | Pigment | Füllstoff | |
|---|---|---|---|---|
| | | | Art | Menge |
| 24 | 75,6 | 23,2 | Kieselsäure | 1,2 |
| 25 | 75,6 | 23,2 | β-Eukryptit | 1,2 |
| 26 | 75,6 | 23,2 | CoralPor® | 1,2 |

(fortgesetzt)

| Nr. | Fritte | Pigment | Füllstoff | |
|-----|--------|---------|-----------|-------|
| | | | Art | Menge |
| 27 | 66,6 | 20,4 | $\beta$-Eukryptit | 13 |
| 28 | 66,6 | 20,4 | Kieselsäure | 13 |
| 29 | 66,6 | 20,4 | Quarzglas-Kugel | 13 |
| 30 | 55 | 35 | Kieselsäure | 10 |
| 31 | 60 | 30 | Kieselsäure | 10 |
| 32 | 75,6 | 23,2 | Silikonharz | 1,2 |
| 33 | 72,8 | 22,4 | Silikonharz | 4,8 |
| 34 | 66,5 | 20,5 | Silikonharz | 13 |
| 35 | 60 | 35 | Kieselsäure | 5 |

Beschreibung der Zeichnungen

Die Erfindung wird im Folgenden anhand von Figuren weiter erläutert. Es zeigen

Fig. 1 — eine schematische und nicht maßstabsgetreue Darstellung eines Verbunds nach einer Ausführungsform, sowie

Fig. 2 und 3 — schematische und nicht maßstabsgetreue Darstellungen einer Glasscheibe nach einer Ausführungsform,

Figur 4 — Ergebnisse von Messungen der Biegezugfestigkeit an verschiedenen gemäß der vorliegenden Offenbarung beschichteten Glasscheiben, wobei für die verschiedenen Messpunkte der Gehalt der Fritte und der Pigmente jeweils variiert wurde,

Figur 5 — Ergebnisse von Messungen der Biegezugfestigkeit an verschiedenen gemäß der vorliegenden Offenbarung beschichteten Glasscheiben, wobei für die verschiedenen Messpunkte verschiedene Füllstoffe, nämlich pyrogene Kieselsäure, $\beta$-Eukryptit und CoralPor® jeweils mit einem Anteil von 1,25 Vol.-% verwendet wurden,

Figur 6 — Ergebnisse von zwei Messungen der Biegezugfestigkeit an verschiedenen gemäß der vorliegenden Offenbarung beschichteten Glasscheiben, wobei für den ersten Messpunkt Reisstärke und für den zweiten Messpunkt Zucker jeweils mit einem Anteil von 10 Vol.-% als Blähmittel verwendet wurden

Fig. 7 bis 12 — Diagramme betreffend den Einfluss von Füllstoff- und Pigmentgehalten in Beschichtungen auf unterschiedliche Schicht- bzw. Scheibeneigenschaften, sowie

Fig. 13 — rasterelektronenmikroskopische Aufnahmen unterschiedlicher beschichteter Glasscheiben.

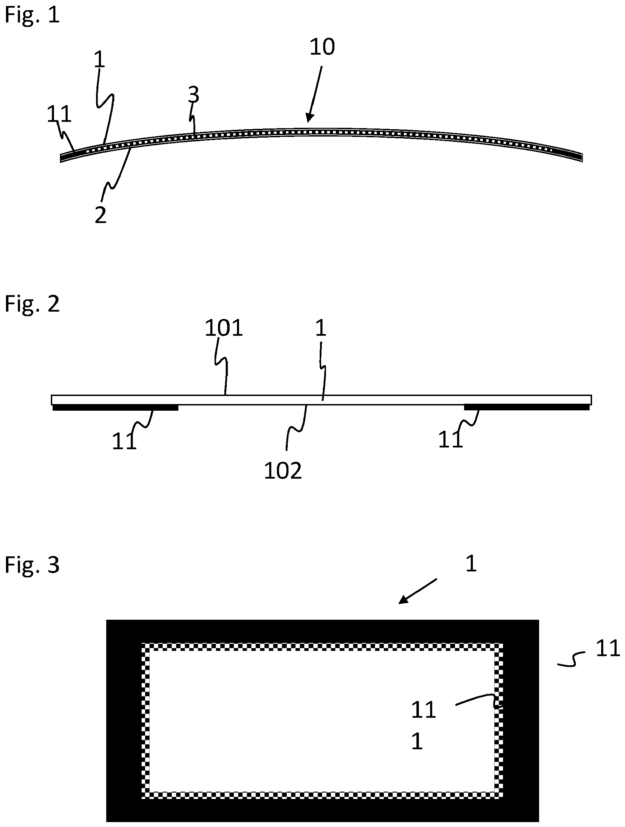

Fig. 1 ist eine schematische und nicht maßstabsgetreue Darstellung eines Verbunds bzw. einer Verbundglasscheibe 10 nach einer Ausführungsform der vorliegenden Offenbarung. Der Verbund 10 umfasst zwei Scheiben 1, 2, wobei es sich bei der Scheibe 1 um eine Glasscheibe für ein Fahrzeug nach einer Ausführungsform der vorliegenden Offenbarung handelt. Scheibe 2 ist eine weitere Glasscheibe und kann beispielsweise aus einem Kalknatronglas oder auch aus dem vorliegend offenbarten Glas der Scheibe 1 bestehen. Zwischen den beiden Glasscheiben 1, 2 ist eine polymerische Lage 3 angeordnet sowie, hier im Randbereich des Verbunds 10, die Beschichtung 11. Diese ist auf einer Seite (nicht bezeichnet) der Glasscheibe 1 angeordnet und kann jeweils im Rahmen der nachfolgenden Beschreibung die erste Beschichtung oder die erste Beschichtung zusammen mit der weiteren Beschichtung als Zwischenschicht umfassen.

Aus Gründen der besseren Darstellung wurde hier die Beschichtung 11 als dick, in der Dicke also vergleich mit derjenigen der beiden Scheiben 1, 2 dargestellt; dies ist aber, wie ausgeführt, lediglich der besseren Darstellung geschuldet. Die Beschichtung 11 ist in der Regel deutlich dünner als jede der beiden Scheiben 1, 2 und in der Regel auch dünner als die polymerische Lage 3. Bei der polymerischen Lage 3 kann es sich auch um eine Folie handeln.

Der Verbund 10 ist hier, wie sichtbar, als gebogene Verbundglasscheibe ausgebildet, wie sie beispielsweise auch als Windschutzscheibe verwendet werden kann. Allgemein, ohne Beschränkung auf das in Fig. 1 dargestellte Beispiel, ist es jedoch auch möglich, dass der Verbund 10 keine gebogenen Scheiben 1, 2 umfasst, sondern eben ausgebildet ist. Auch ist es möglich, dass die Krümmung des Verbunds 10 gerade umgekehrt ausgebildet ist zu der in Fig. 1 dargestellten Abbildung. Im Beispiel der Fig. 1 wäre die Glasscheibe 1 die Außenseite einer Windschutzscheibe, es ist jedoch allgemein auch möglich, dass die Glasscheibe 1 an der Innenseite einer Windschutzscheibe angeordnet ist. In jedem Fall ist allerdings die Beschichtung 3 zwischen den beiden Glasscheiben 1, 2 angeordnet.

Eine Anordnung wie in Fig. 1 kann aber vorteilhaft sein, da die Glasscheibe 1 als Komponenten des glasigen Materials $SiO_2$ und $B_2O_3$ umfasst. Ein solches Borosilikatglas ist kratzbeständiger als beispielsweise ein Kalk-Natron-Glas, sodass es vorteilhaft sein kann, wenn die Glasscheibe 1 wie in Fig. 1 dargestellt im Verbund 10 so ausgebildet ist, dass sie nach "außen" weist, also im Falle einer Verwendung als Windschutzscheibe nach außen weisen würde. Denn auf diese Weise wäre ein besserer Schutz vor Steinschlag und ähnlichen mechanischen Belastungen gegeben.

Zur Verdeutlichung des Aufbaus der Glasscheibe 1 nach Ausführungsformen ist diese in den Fig. 2 und 3 jeweils in Form einer schematischen und maßstabsgetreuen Abbildung dargestellt. Fig. 2 zeigt dabei eine Seitenansicht. Hier ist die Glasscheibe 1 allerdings noch nicht gebogen ausgebildet. Allgemein, ohne Beschränkung auf das in Fig. 1 gezeigte Beispiel einer Glasscheibe 1, ist es auch möglich, dass die Glasscheibe gebogen vorliegt. Vorteilhaft kann es aber sein, wenn zunächst eine flache, nicht gebogene Scheibe 1 verwendet wird, welche dann später gebogen wird, und zwar beispielsweise in einem thermischen Verfahren. Auch hier ist aus Gründen der besseren Darstellung die Dicke der Beschichtung 11 deutlich größer dargestellt als in der Realität.

Die Anordnung der Scheibe 1 entspricht derjenigen in Fig. 1, wie ausgeführt mit der Ausnahme, dass die Scheibe in Fig. 2 nicht gebogen ausgeführt ist. Wie man erkennen kann, ist die Beschichtung 11 hier auf der Seite 102 ausgebildet, welche im Verbund 10 der zweite Scheibe 2 zugewandt ist. Nicht abgebildet ist hier die polymerische Lage 3, welche im Verbund zwischen der Scheibe 1 und der Scheibe 2 angeordnet ist. Es wird hier ausdrücklich darauf hingewiesen, dass die polymerische Lage 3 sowohl direkt die Seite 102 der Scheibe kontaktiert als auch auf der in dem Bereich (oder den Bereichen) der Scheibe 1 (bzw. der Seite 102 der Scheibe 1) angeordneten Beschichtung 11 angeordnet ist.

Die Beschichtung 11 ist hier im Randbereich der Scheibe 1 angeordnet, in der Darstellung der Fig. 2 jeweils links und rechts. Hier kann es beispielsweise sein, dass die Beschichtung insgesamt in Form eines "Rahmens" aufgebracht ist.

Hierzu wird auf die Fig. 3 verwiesen, welche in ebenfalls schematischer und nicht maßstabsgetreuer Abbildung eine Aufsicht auf eine Scheibe 1 nach einer Ausführungsform zeigt. Die Beschichtung 11 ist hier als um den Rand der Scheibe 1 umlaufender Rahmen ausgebildet, wobei die Beschichtung zunächst deckend, also als Schicht ohne Unterbrechungen, ausgebildet ist, und zur Mitte der Scheibe 1 hin über ein Raster- oder Punktmuster 111 in den unbeschichteten Bereich übergeht. Dieser unbeschichtete Bereich ist für den Fall einer Verwendung der Scheibe 1 in einem Verbund 10 der Sichtbereich beispielsweise einer Windschutzscheibe. Selbstverständlich ist es allgemein möglich, dass der Rahmen nicht so gleichmäßig ausgebildet ist wie schematisch in Fig. 3 dargestellt, sondern beispielsweise Ausbuchtungen aufweist, wie dies beispielsweise bei den Windschutzscheiben im Bereich der Rückspiegel häufig der Fall ist.

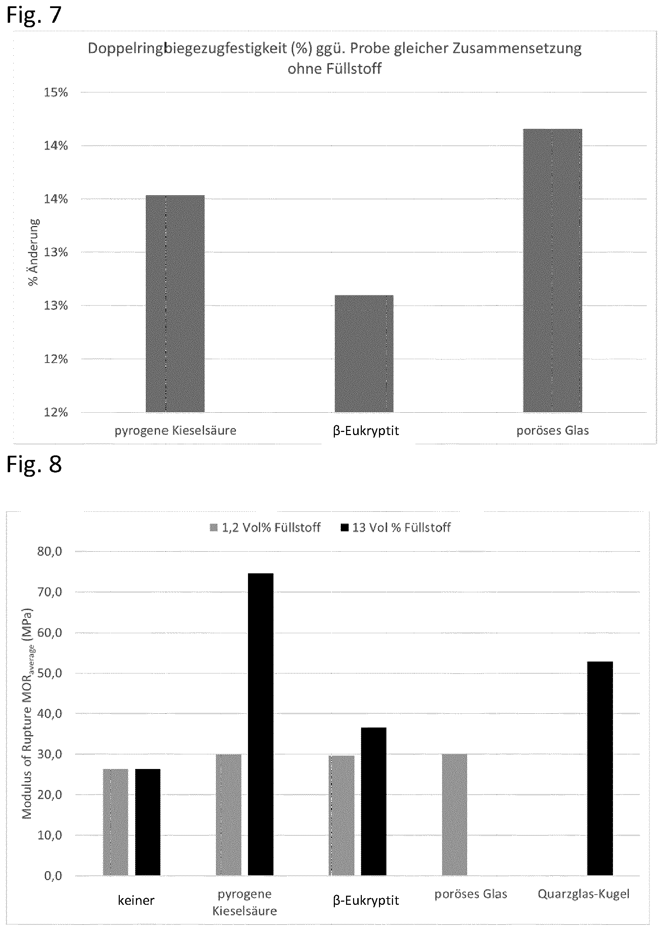

Figur 7 zeigt eine Darstellung der Änderung der Biegezugfestigkeit gegenüber eines beschichteten Substrates ohne Füllstoff an verschiedenen gemäß der vorliegenden Offenbarung beschichteten Glasscheiben, wobei für die verschiedenen Messpunkte verschiedene Füllstoffe, nämlich eine pyrogene Kieselsäure, β-Eukryptit und CoralPor® jeweils mit einem Anteil von 1,25 Vol% verwendet wurden. Die Biegezugfestigkeit wurde jeweils mit einem Doppelringverfahren gemäß DIN 1288-5 ermittelt. Dabei war der jeweilige der Messung unterzogene Bereich der Glasscheibe jeweils vollflächig beschichtet, sodass unbeschichtete Bereiche der Glasscheibe im Wesentlichen keinen Einfluss auf die Messergebnisse hatten. Dieser Figur ist insbesondere der Einfluss des Anteils der Pigmente auf die Biegezugfestigkeit gut zu entnehmen.

Fig. 8 zeigt den Einfluss des Füllstoffgehalts für unterschiedliche Füllstoffe auf den durchschnittlichen Bruchmodul der beschichteten Glasscheiben. Wie man erkennen kann, hat selbst eine nur geringe Zugabe von lediglich 1,2 Vol.-% bereits eine Verbesserung des Bruchmoduls, also seine Erhöhung, im Vergleich zu Beschichtungen, welche keinen Füllstoff umfassen, also lediglich Glasfluss/Bindemittel und Pigment, zur Folge. Erstaunlicherweise stellt sich heraus, dass gerade eine Zugabe von Kieselsäure besonders vorteilhaft sein kann, insbesondere in relativ hohen Gehalten von 13 Vol.-%. Dies ist vor allen Dingen verwunderlich im Vergleich mit einem Füllstoff wie β-Eukryptit, welcher ja einen besonders niedrigen thermischen Ausdehnungskoeffizienten (nämlich sogar im negativen Bereich) aufweist. So wäre zu vermuten gewesen, dass ein solcher negativ dehnender Füllstoff wie β-Eukryptit besonders einfach dazu beitragen sollte, den resultierenden thermischen Ausdehnungskoeffizienten der Beschichtung, in welcher die im Vergleich zum Glassubstrat relativ hoch dehnenden Pigmente ja optimalerweise sogar ausgeglichen werden sollten, möglichst niedrig zu halten bzw. an denjenigen des Glassubstrats anzupassen. Jedoch ist der positive Effekt von solchen speziell niedrig dehnenden Füllstoffen (bzw. sogar negativ dehnenden Füllstoffen) anscheinend überraschenderweise weniger groß als angenommen. Dies gilt in entsprechender Weise auch für poröse Glaskugeln wie "CoralPor®", welche ebenfalls zuvor als möglicherweise sehr günstig für die resultierende thermische Dehnung und aufgrund der inhärenten Porosität auch für den Ausgleich thermisch induzierter Spannungen erachtet wurden.

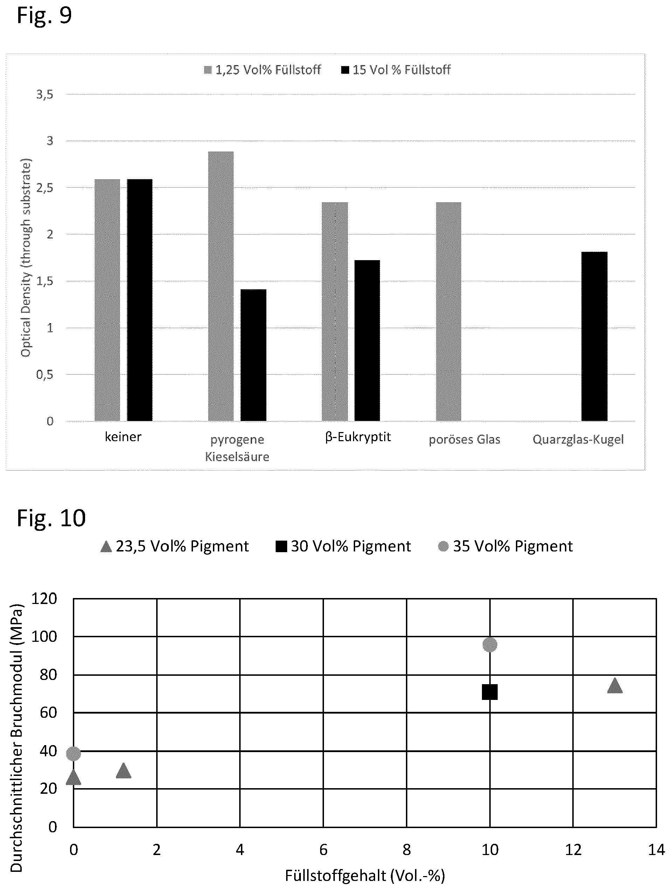

Fig. 9 zeigt den Einfluss der Füllstoffe und Füllstoffgehalte auf die optische Dichte, bestimmt durch die Scheibe hindurch. Wie man sieht, kann durch eine Füllstoffgabe die optische Dichte sogar verbessert werden, insbesondere, wenn nur eine geringe Füllstoffmenge hinzugegeben wird. Dies könnte möglicherweise an einer besseren Verteilung der Pigmentpartikel in der Beschichtung liegen, welche durch geringe Mengen von Füllstoffen gegebenenfalls hervorgerufen werden könnte. Dies ist jedoch offensichtlich abhängig von der Art des zugegebenen Füllstoffs. Bei den meisten der untersuchten Füllstoffe und insbesondere höheren Füllstoffgehalten ist allerdings die Zugabe von Füllstoff mit einer Abnahme der optischen Dichte verbunden, wobei diese allerdings immer noch als ausreichend erachtet wird.

Fig. 10 zeigt schematisch den Einfluss von Pigment- und Füllstoffgehalt auf den resultierenden durchschnittlichen Bruchmodul. Allgemein führen höhere Gehalte an Pigmenten und höhere Gehalte an Füllstoffen (wobei der hier verwendete Füllstoff eine Kieselsäure ist) auch zu höheren Bruchmoduln.

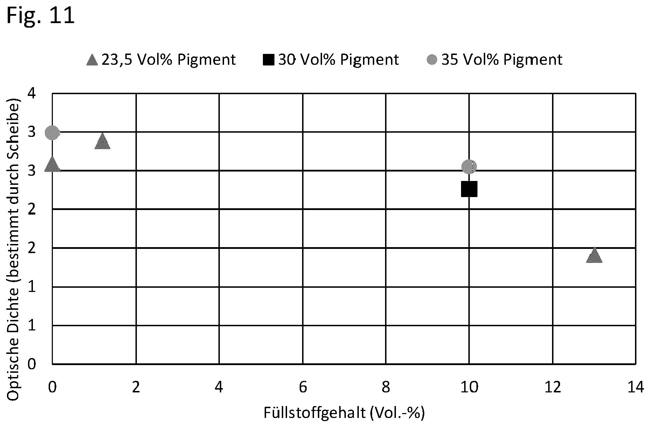

Fig. 11 zeigt für die in Fig. 10 hinsichtlich des resultierenden Bruchmoduls untersuchten Proben den Einfluss von Füllstoff- und Pigmentgehalt der Beschichtung auf die optische Dichte. Hier zeigt sich, dass bis zu Füllstoffgehalten von etwa 10 Vol.-% der Einfluss auf die optische Dichte noch vertretbar gering ist und erst bei höheren Füllstoffgehalten der bereits beschriebene negative Effekt auf die optische Dichte eintritt. Bei geringen Füllstoffgehalten kommt es zuerst, wie auch bereits schon diskutiert, zumindest für den hier betrachteten Füllstoff, eine Kieselsäure, sogar zu einer Erhöhung der optischen Dichte.

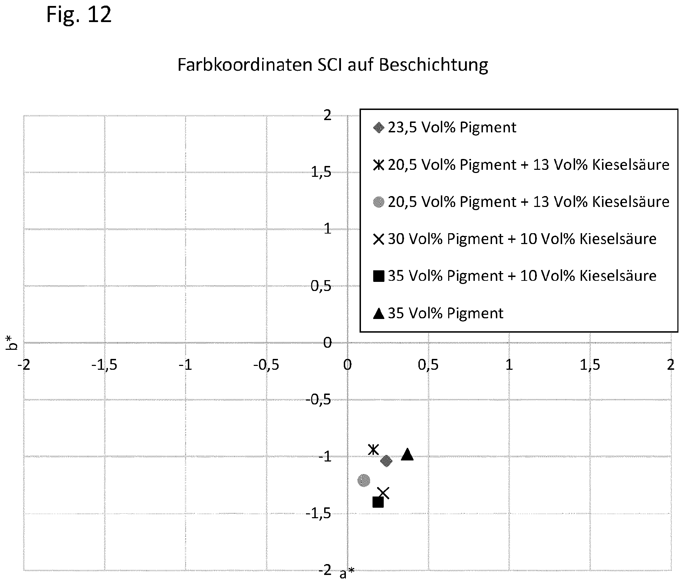

Fig. 12 zeigt für unterschiedliche Pigment- und Füllstoffgehalte den Einfluss auf die resultierenden Farbkoordinaten der Beschichtung. Der Einfluss auf die resultierende Färbung der Beschichtung ist sehr gering, sodass sogar im hier betrachteten "Unbuntbereich" der Farbkoordinaten a* und b* nur sehr geringe und nicht systematische Abweichungen auftreten. Dies gilt auch für recht hohe Füllstoffgehalte von 13 Vol.-%.

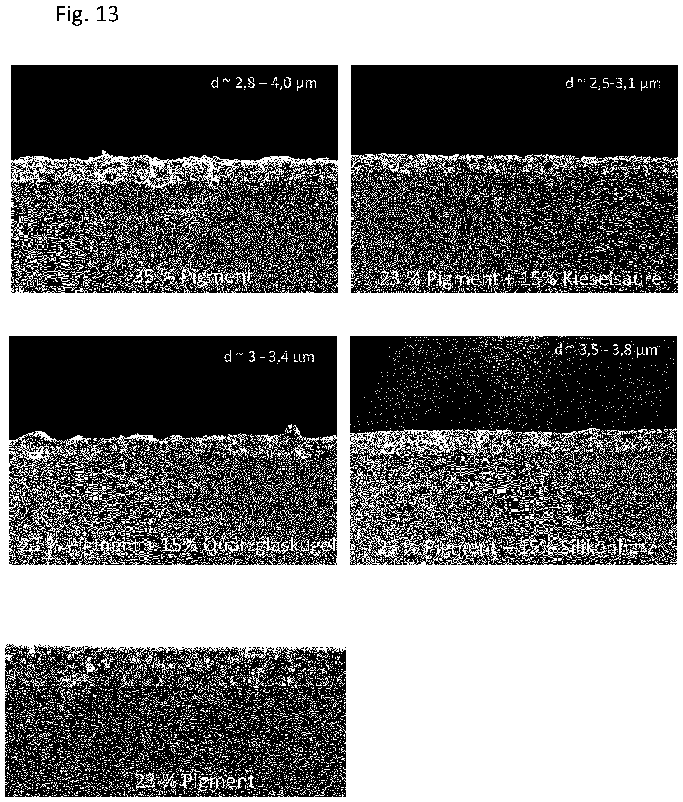

Fig. 13 zeigt die Schichtausbildung für unterschiedliche Beschichtungen. Links oben und ganz unten links sind zwei Beschichtungen zu sehen, welche neben dem Glasfluss lediglich Pigment umfassen, und zwar in unterschiedlichen gehalten. Die ganz links unten dargestellte Beschichtung, welche 23 Vol.-% Pigment umfasst, zeigt eine glatte, dichte Beschichtung, wohingegen bei höheren Pigmentgehalten eine bis zu 4 $\mu$m dicke, leicht poröse und vor allen Dingen ungleichmäßig dicke Schicht resultiert. Beschichtungen im mittleren Bereich von Fig. 13 umfassen 23 Vol.-% Pigment und jeweils 15 Vol.-% eines Füllstoffs. Während der Quarzglas-Füllstoff ($d_{50}$ zwischen 1 und 5$\mu$m) zu einem sehr unruhigen Schichtaufbau führt, bei welchem eine geringe Kratzfestigkeit alleine schon deshalb resultiert, weil einzelne Bestandteile der Beschichtung hervorstehen, führen die silikonbasierten Füllstoffe der "Silres®"-Beschichtung zu einer glatten Schicht mit gleichmäßig verteilten Poren, welche durch das Ausbrennen der organischen Bestandteile des Füllstoffs entstanden sind. Die Beschichtung ist damit allerdings durch die gleichmäßig verteilten Poren offensichtlich instabil geworden und daher ungünstig hinsichtlich der mechanischen Schichtstabilität.

Besonders große Vorteile sind hingegen mit einer Beschichtung, wie sie rechts oben in Fig. 13 dargestellt ist, verbunden. Der verwendete Füllstoff, eine Kieselsäure, führt bei Nicht-Bindemittelgehalten von sogar mehr als 37 Vol.-% (also vergleichbar der Beschichtung im linken oberen Bereich von Fig. 10 mit 35 Vol.-% Pigment) dennoch und sehr überraschend zu einer glatten Schichtausbildung, vergleichbar einer Schicht mit deutlich weniger partikulären Gehalt (wie der Beschichtung mit 23 Vol.-% Pigment ganz unten links). Jedoch ist die Füllstoffzugabe hier mit der Ausbildung einer gradierten Porosität verbunden, welche gerade zur Grenzfläche Beschichtung - Glasscheibe hinzunimmt. Die Erfinder vermuten, dass gerade durch diesen Gradienten der Porosität eine besonders günstige Ausbildung resultiert, sodass die Beschichtung noch ausreichend kratzfest ist, dennoch eine hohe mechanische Festigkeit der beschichteten Glasscheibe resultiert.

Bezugszeichenliste

| 1 | Glasscheibe |
|---|---|
| 10 | Verbund, Verbundscheibe |
| 11 | Beschichtung |
| 101, 102 | Seiten der Glasscheibe |
| 111 | Punktraster |
| 2 | Weitere Glasscheibe |
| 3 | Polymerische Lage |

**Patentansprüche**

1. Glasscheibe, insbesondere bereichsweise beschichtete Glasscheibe für ein Fahrzeug umfassend ein Glas umfassend $SiO_2$ und $B_2O_3$, umfassend

wenigstens eine in wenigstens einem Bereich wenigstens einer Seite der Glasscheibe aufgetragene Beschichtung mit einer ersten Beschichtung,
wobei die erste Beschichtung

wenigstens ein Bindemittel umfassend $SiO_2$,
wenigstens ein Pigment und
vorzugsweise wenigstens einen Zusatzstoff umfasst, und

wobei die Glasscheibe in dem wenigstens einen Bereich, welcher auf der wenigstens einen Seite der Glasscheibe die aufgetragene erste Beschichtung aufweist, eine Biegefestigkeit zwischen wenigstens 5 und höchstens 170 MPa, bevorzugt wenigstens 20 und höchstens 170 MPa, besonders bevorzugt wenigstens 35 MPa, ganz besonders bevorzugt wenigstens 60 MPa, und am meisten bevorzugt wenigstens 80 MPa, aufweist.

2. Glasscheibe nach Anspruch 1, wobei das Bindemittel glasbasiert ist, wobei vorzugsweise die Beschichtung als Emailleschicht ausgebildet ist, und vorzugsweise einen Zusatzstoff umfasst, wobei besonders bevorzugt der Zusatzstoff ein Füllstoff ist.

3. Glasscheibe nach Anspruch 2, wobei der Füllstoff ein Füllstoff mit einem linearen thermischen Ausdehnungskoeffizienten zwischen $-10 * 10^{-6}/K$ und $+10 * 10^{-6}/K$ ist, bevorzugt zwischen $-8 * 10^{-6}/K$ und $+5 * 10^{-6}/K$, besonders bevorzugt zwischen $-6,5 * 10^{-6}/K$ und $+3* 10^{-6}/K$.

4. Glasscheibe nach einem der Ansprüche 1 bis 3, aufweisend wenigstens eines der folgenden Merkmale:

- in wenigstens einem Teilbereich oder innerhalb des gesamten wenigstens einen Bereichs der wenigstens einen Seite der Glasscheibe ist eine weitere Beschichtung, insbesondere eine Zwischenschicht, zwischen Glasscheibe und der ersten Beschichtung angeordnet,
- die erste Beschichtung umfasst zwischen 0,5 Vol.-% und 50 Vol.-% Pigment, vorzugsweise 0,5 - 40 Vol.-% Pigment, besonders bevorzugt zwischen 20 und 40 Vol.-% Pigment, und zwischen 99,5 Vol.-% und 50 Vol.-% Glasfritte,
- das Glas der Glasscheibe weist einen linearen thermischen Ausdehnungskoeffizienten zwischen $2 * 10^{-6}/K$ und $6 * 10^{-6}/K$ auf,
- das Glas der Glasscheibe umfasst wenigstens 60 Gew.-% $SiO_2$ bis höchstens 85 Gew.-% $SiO_2$ und/oder wenigstens 7 Gew.-% $B_2O_3$ bis höchstens 26 Gew.-% $B_2O_3$,
- die erste Beschichtung weist einen linearen thermischen Ausdehnungskoeffizienten zwischen mindestens $3 * 10^{-6}/K$ und höchstens $10 * 10^{-6}/K$ auf, bevorzugt von weniger als $9 * 10^{-6}/K$,
- die Glasscheibe weist eine Dicke zwischen mindestens 1 mm und höchstens 12 mm auf.

5. Glasscheibe nach einem der Ansprüche 1 bis 4, wobei die erste Beschichtung einen Zusatzstoff umfasst, wobei der Zusatzstoff ein Blähmittel oder ein Füllstoff ist.

6. Glasscheibe nach einem der Ansprüche 1 bis 5, wobei das Bindemittel eine Glasfritte umfasst oder aus dieser besteht und wobei bevorzugt die Glasfritte einen färbenden Bestandteil umfasst, und/oder wobei besonders bevorzugt der Anteil des Pigments an der Beschichtung höchstens 40 Vol.-%, bevorzugt höchstens 20 Vol.-% umfasst.

7. Paste zum Herstellen einer Beschichtung auf einer Glasscheibe, vorzugsweise einer zumindest bereichsweise beschichteten Glasscheibe nach einem der Ansprüche 1 bis 6, umfassend

- wenigstens ein Bindemittel umfassend $SiO_2$ und
- wenigstens ein Pigment,
- vorzugsweise ein Medium,

wobei das Bindemittel eine Glasfritte umfasst oder aus dieser besteht und wobei die Glasfritte ein Glas umfassend wenigstens die folgenden Bestandteile in Gew.-% auf Oxidbasis umfasst:

| | |
|---|---|
| $SiO_2$ | 10 bis 70 |
| $B_2O_3$ | 10 bis 26 |

(fortgesetzt)

| Al$_2$O$_3$ | mehr als 0 bis 9. |
|---|---|

8. Paste nach Anspruch 7, aufweisend eine Viskosität, vorzugsweise bestimmt mittels eines Plattenviskosimeters, zwischen 1500 und 8000 mPas, bevorzugt zwischen 2000 mPas und 6500 mPas und besonders bevorzugt zwischen 2500 mPas und 5000 mPas.

9. Paste nach einem der Ansprüche 7 oder 8, aufweisend wenigstens eines der folgenden Merkmale:

- Die Paste umfasst zwischen 0,5 Vol.-% und 50 Vol.-% Pigment, vorzugsweise weniger als 40 Vol.-% Pigment, und zwischen 50 Vol.-% und 99,5 Vol.-% Glasfritte, bezogen auf den von der Paste umfassten Feststoffanteil,
- Die Glasfritte weist einen linearen thermischen Ausdehnungskoeffizienten zwischen mindestens 2 * 10$^{-6}$/K und höchstens 10 * 10$^{-6}$/K auf, bevorzugt zwischen mindestens 3 * 10$^{-6}$/K und höchstens 8,5 * 10$^{-6}$/K,
- die Paste umfasst einen Zusatzstoff, wobei der Zusatzstoff ein Blähmittel oder ein Füllstoff ist, wobei bevorzugt der Zusatzstoff ein Füllstoff mit einem linearen thermischen Ausdehnungskoeffizienten zwischen -10 * 10$^{-6}$/K und +10 * 10$^{-6}$/K ist,
- die Glasfritte umfasst einen färbenden Bestandteil, wobei bevorzugt der Anteil des Pigments an der Beschichtung höchstens 40 Vol.-%, bevorzugt höchstens 20 Vol.-% beträgt.

10. Verbund umfassend eine Glasscheibe nach einen der Ansprüche 1 bis 6 sowie eine weitere Glasscheibe, wobei vorzugsweise die Beschichtung zwischen den Glasscheiben angeordnet ist.

Fig. 1

Fig. 2

Fig. 3

Fig. 4

Doppelringbiegezugfestigkeit (% ggü. niedrigstem Wert)

Fig. 5

Doppelringbiegezugfestigkeit (%) ggü. Probe mit gleicher Zusammensetzung ohne Füllstoff

Fig. 6

Fig. 7

Doppelringbiegezugfestigkeit (%) ggü. Probe gleicher Zusammensetzung
ohne Füllstoff

Fig. 8

## Fig. 9

## Fig. 10

Fig. 11

Fig. 12

Farbkoordinaten SCI auf Beschichtung

Fig. 13

Europäisches
Patentamt
European
Patent Office
Office européen
des brevets

**EUROPÄISCHER RECHERCHENBERICHT**

Nummer der Anmeldung

**EP 22 20 0472**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 099 641 B1 (SCHOTT AG [DE]) 29. November 2017 (2017-11-29) * Zusammenfassung * * Absätze [0001], [0003], [0007], [0016] - [0018], [0022] - [0032], [0054], [0058] - [0060], [0072] - [0073], [0082], [0086] * * Absatz [0[00] * | 1-10 | INV. C03C3/091 B32B17/00 B60R1/00 C03C3/093 C03C8/02 C03C8/04 C03C8/16 C03C17/00 |
| X | EP 3 169 735 B1 (SCHOTT AG [DE]) 23. Mai 2018 (2018-05-23) * Zusammenfassung * * Absätze [0001] - [0108]; Beispiele 1-4; Tabellen 1-5 * | 1-10 | C03C17/34 C03C27/10 C09D1/00 C09D11/037 |
| X | WO 2019/101880 A1 (SCHOTT AG [DE]) 31. Mai 2019 (2019-05-31) * Zusammenfassung * * Seite 1, Zeilen 9-32 * * Seite 4, Zeilen 9-29 * * Seite 5, Zeilen 26-32 * * Seite 8, Zeilen 5-11 * * Seite 10, Zeile 10 - Seite 45, Zeile 30 * | 1-10 | |
| | | | **RECHERCHIERTE SACHGEBIETE (IPC)** |
| X | DE 198 34 801 A1 (SCHOTT GLAS [DE]) 3. Februar 2000 (2000-02-03) * das ganze Dokument * * insbesondere [0001]-[0002], [0006], [0008], [0029], [0039]-[0040], [0047], [0052], gläser 1-9, Beispiele 1-25 udn Tabellen 1-2 * | 1-10 | C03C B60R B32B C09D C09G |

Der vorliegende Recherchenbericht wurde für alle Patentansprüche erstellt

| Recherchenort | Abschlußdatum der Recherche | Prüfer |
|---|---|---|
| München | 7. März 2023 | Heer, Stephan |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 20 0472

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-03-2023

| Im Recherchenbericht angeführtes Patentdokument | Datum der Veröffentlichung | Mitglied(er) der Patentfamilie | Datum der Veröffentlichung |
|---|---|---|---|
| EP 3099641 B1 | 29-11-2017 | CA 2938163 A1 | 06-08-2015 |
| | | DE 102014101140 A1 | 30-07-2015 |
| | | EP 3099641 A1 | 07-12-2016 |
| | | ES 2658411 T3 | 09-03-2018 |
| | | PL 3099641 T3 | 30-05-2018 |
| | | PT 3099641 T | 27-02-2018 |
| | | US 2016340232 A1 | 24-11-2016 |
| | | WO 2015113707 A1 | 06-08-2015 |
| EP 3169735 B1 | 23-05-2018 | DE 102014010335 A1 | 14-01-2016 |
| | | DE 202015006002 U1 | 22-09-2015 |
| | | EP 3169735 A1 | 24-05-2017 |
| | | ES 2676757 T3 | 24-07-2018 |
| | | WO 2016008848 A1 | 21-01-2016 |
| WO 2019101880 A1 | 31-05-2019 | BR 112020010277 A2 | 13-10-2020 |
| | | BR 112020010342 A2 | 10-11-2020 |
| | | CN 111587231 A | 25-08-2020 |
| | | CN 111670171 A | 15-09-2020 |
| | | DE 102017127624 A1 | 23-05-2019 |
| | | EP 3713888 A1 | 30-09-2020 |
| | | EP 3713889 A1 | 30-09-2020 |
| | | US 2020283333 A1 | 10-09-2020 |
| | | US 2020354264 A1 | 12-11-2020 |
| | | US 2023035460 A1 | 02-02-2023 |
| | | WO 2019101873 A1 | 31-05-2019 |
| | | WO 2019101878 A1 | 31-05-2019 |
| | | WO 2019101880 A1 | 31-05-2019 |
| DE 19834801 A1 | 03-02-2000 | AT 223879 T | 15-09-2002 |
| | | CA 2279785 A1 | 01-02-2000 |
| | | DE 19834801 A1 | 03-02-2000 |
| | | DK 0978493 T3 | 02-12-2002 |
| | | EP 0978493 A1 | 09-02-2000 |
| | | ES 2183463 T3 | 16-03-2003 |
| | | JP 3917331 B2 | 23-05-2007 |
| | | JP 2000095540 A | 04-04-2000 |
| | | MX PA99007005 A | 25-07-2005 |
| | | PL 334699 A1 | 14-02-2000 |
| | | PT 978493 E | 31-12-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015059406 A
- WO 2017157660 A1
- WO 2019130285 A1
- WO 2018122769 A1
- EP 3022164 B1